# EUROPEAN PATENT APPLICATION

(11) **EP 4 703 065 A1**
(43) Date of publication of application: **04.03.2026**
(21) Application number: 23936163.7
(22) Date of filing: 11.05.2023
(51) Int. Cl.: B22F 1/06

(54) **NON-SPHERICAL PARTICLE AND DIELECTRIC COMPOSITE MATERIAL COMPRISING SAME**

(71) Applicant: Huawei Technologies Co., Ltd., Shenzhen, Guangdong 518129 (CN)
(72) Inventor: XIAO, Jianliang, Liverpool, Crown Street Liverpool L69 7ZD (GB); HUANG, Yi, Liverpool L69 3GJ (GB); BENNETT, Elliot, Liverpool, CrownStreet Liverpool L69 7ZD (GB); CALISIR, Ilkan, Liverpool, Crown Street Liverpool L69 7ZD (GB); LAI, Lianglun, Shenzhen, Guangdong 518129 (CN); LIU, Yongjun, Shenzhen, Guangdong 518129 (CN); LI, Cheng, Shenzhen, Guangdong 518129 (CN); WANG, Rong, Shenzhen, Guangdong 518129 (CN)
(74) Representative: Goddar, Heinz J.
(86) International application number: PCT/CN2023/093695
(87) International publication number: WO 2024/229848

(57) **Abstract**

This application relates to a non-spherical particle. The non-spherical particle has a first dimensional size, a second dimensional size, and a third dimensional size. The first dimensional size is between 0.01 µm and 1 µm, a ratio of the first dimensional size to the second dimensional size is between 1/10 and 1/1200, and the third dimensional size is between the first dimensional size and the second dimensional size. The non-spherical particle includes one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). A surface of the non-spherical particle is coated with a surfactant. The surfactant is selected from one or more of a fatty acid, an organosilicone compound, and a combination thereof. This application also relates to a dielectric composite material including the non-spherical particle, and a method for regulating dielectric properties of the composite material by using the non-spherical particle.

## Description

### TECHNICAL FIELD

This application relates to the field of dielectric materials, and in particular, to a non-spherical particle that can be used to regulate dielectric properties of a composite material and a method for preparing the non-spherical particle. This application also relates to a dielectric composite material including the non-spherical particle, and a method for regulating dielectric properties of the composite material by using the non-spherical particle.

### BACKGROUND

A requirement for miniaturization of high-power storage devices and radio frequency devices (for example, dielectric resonator antennas (DRAs)) has pushed forward development of dielectric materials with improved and desired characteristics. Materials with higher dielectric constants and lower dielectric losses have attracted wide attention. In the 5G era, innumerable new devices have emerged with higher performance and new functions. Advanced dielectric materials are to have an immeasurable influence on future application, including 5G healthcare, smartphone innovation, and the Internet of things (IoT). Such application and scenarios are dependent of antenna technologies, including resonators, waveguide filters, terminals, and base station antennas. Common technological requirements for these products are to implement frequency and direction control and reconfiguration, intelligent control of multi-antenna beams, and an isolation reconfiguration technology for high-speed connection.

With development of 5G technologies, increasing and higher requirements are imposed on the performance of an antenna, including wide bandwidth, miniaturization, and low energy consumption. Novel materials with compliant dielectric constants, compliant relaxation, and low loss tangent and a capability to control dielectric properties in a wide frequency range are in urgent need, to satisfy these requirements. Therefore, methods for controlling these material parameters are indispensable.

In conventional technologies, a plurality of methods have been tried to resolve the foregoing problem. One method is to use a liquid antenna, so that performance of the antenna is dynamically adjusted based on a characteristic that a size of liquid is adjustable and controllable. However, this method needs to have a liquid storage and transportation system to serve as a carrier of the liquid, and also needs to have a pump system with high precision control for adjusting the flow of the liquid. These systems occupy some physical space and are not easy to be miniaturized. For application of a terminal (such as a mobile phone, a watch, or a tablet) having very limited space, it is difficult to deploy the size-adjustable liquid antenna.

Another idea is to use a novel liquid material without changing an original structure of the antenna. The material itself has good performance such as ultra-wideband frequency response, an ultra-wide operating temperature range, and passive liquid cooling. However, no satisfactory novel liquid materials have been developed to date.

Polymer-ceramic composite materials have been attracting wide attention to date. For the composite material, a low-loss polymer (for example, epoxy resin and siloxane resin) is combined with ceramic (for example, CaCu₃Ti₄O₁₂ and BaTiO₃) having a high dielectric constant, to obtain a new material having a high dielectric constant and a low loss. These polymer-ceramic composite materials have greatly improved their dielectric constants and can achieve low losses at some frequencies. However, because dielectric properties of the composite materials are a simple combination of dielectric properties inherent to each component, such a preparation method is limited and does not provide control over dielectric relaxation.

In addition, adding some metal particles as a filler to a polymer matrix may improve the dielectric constant, but does not improve or slightly improves the dielectric loss, and a weight percentage of the metal filler needs to be kept below concentration for forming a conductive network. The dielectric loss tangent increases exponentially as the weight percentage increases when a threshold for forming the conductive network is exceeded. These metal-polymer composite materials have adverse impact on the loss tangent and are also limited in practicability. For example, it is learned, through computing in a theoretical study, that silver particles dispersed in the matrix need to be evenly distributed and directional in a same direction. This is impossible for actual composite materials.

Currently, no method can significantly improve dielectric constants of the dielectric materials and improve the relaxation (if needed) while reducing the dielectric loss tangent.

Therefore, to satisfy the requirements of the 5G technologies on the wide bandwidth, miniaturization, and low energy consumption of the antenna, a novel material widely applicable needs to be provided. The novel material may have a compliant dielectric constant in a wide frequency range while considering both relaxation (in some cases) and a low loss. In addition, a method needs to be developed for producing the novel dielectric material with controlled electromagnetic properties (including the dielectric constant, dielectric relaxation, and dielectric loss) and preferably proper stability and low energy consumption.

### SUMMARY

This application provides a non-spherical particle, which may be used to regulate dielectric properties of a dielectric composite material.

According to one aspect, this application provides a non-spherical particle. The non-spherical particle has a first dimensional size, a second dimensional size, and a third dimensional size. The first dimensional size is between 0.01 µm and 1 µm, a ratio of the first dimensional size to the second dimensional size is between 1/10 and 1/1200, and the third dimensional size is between the first dimensional size and the second dimensional size. The non-spherical particle includes one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). A surface of the non-spherical particle is coated with a surfactant. The surfactant is one or more of a fatty acid, an organosilicon compound, and a combination thereof.

According to another aspect, this application provides a method for preparing a non-spherical particle. The method includes a step of grinding raw material powder and a surfactant together for 1 to 20 hours to obtain the non-spherical particle. The raw material powder includes one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). The surfactant is selected from one or more of a fatty acid, an organosilicone compound, and a combination thereof.

According to still another aspect, this application provides a dielectric composite material, including the non-spherical particle according to this application or the non-spherical particle that is prepared by using the method according to this application.

According to yet another aspect, this application provides a method for regulating dielectric properties of a composite material. The method includes adding, to a matrix of the composite material, the non-spherical particle according to this application or the non-spherical particle that is prepared by using the method according to this application. The dielectric properties are one or more of a dielectric constant, a dielectric loss, and dielectric relaxation.

According to still yet another aspect, this application provides use of the non-spherical particle according to this application, or the non-spherical particle that is prepared by using the method according to this application, or the dielectric composite material according to this application in preparing a dielectric element.

This application provides a method for preparing a filler particle through a simple preparation technology and a low-cost raw material by selecting particular elements to form the particle and a particular shape of the particle and performing particular surface modification, to improve dielectric properties of a composite material. This application describes a simple, cost-effective, and widely applicable method for improving performance of any composite material for which a dielectric constant and loss tangent (and dielectric relaxation in some cases) are important factors. The method can be applied to various composite materials in a solid, liquid, semi-solid, or liquid-solid mixed form. In particular, in this application, the dielectric constant and/or dielectric relaxation can be significantly improved in a controllable manner by adding the particular filler particle to the composite material while reducing the dielectric loss tangent.

Therefore, this application offers more possibilities for developing high-performance dielectric composite materials by providing a new type of non-spherical particles as fillers or additives. Specifically, this application provides one or more of the following advantages: (1) improving the dielectric constant of the composite material; (2) improving the dielectric relaxation of the composite material; (3) reducing the dielectric loss tangent of the composite material; (4) allowing the dielectric properties (for example, the dielectric constant, dielectric relaxation, and loss tangent) to be regulated; (5) having proper stability; (6) having low power consumption; (7) having low costs; and (8) providing wide applicability to suit various types and forms of composite materials, components, and devices, and various application scenarios.

### BRIEF DESCRIPTION OF DRAWINGS

This application is described in detail through the following specific implementations with reference to the accompanying drawings, so that a person skilled in the art can better understand this application but these specific implementations shall not be understood as limiting the scope of this application in any manner.
FIG. 1 shows measured real parts of complex dielectric constants and loss tangent of composite materials that are prepared by dispersing a series of metal powder (particles having irregular shapes) separately in PEG 600 (polyethylene glycol 600) liquid;
FIG. 2 shows scanning electron microscope (SEM) images of aluminum irregular spherical powder particles (a in FIG. 2, also referred to as "aluminum powder" or "raw material aluminum powder" in the following descriptions) and aluminum sheet particles (b in FIG. 2, also referred to as "raw material aluminum sheet particles" in the following descriptions);
FIG. 3 shows measured real parts of complex dielectric constants and loss tangent of composite materials that are prepared by dispersing the aluminum irregular spherical powder particles (a in FIG. 2) and the aluminum sheet particles (b in FIG. 2) in FIG. 2 separately in PEG 600 (polyethylene glycol 600) liquid;
FIG. 4 shows SEM images of aluminum sheet particles that are obtained by grinding raw material aluminum powder, a stearic acid (SA, which is a surfactant), and toluene (which is a wetting solvent) for 1 hour, 2 hours, and 4 hours separately according to an implementation solution of this application;
FIG. 5 shows measured real parts of complex dielectric constants and loss tangent of composite materials that are prepared by dispersing the aluminum sheet particles shown in FIG. 4 and raw material aluminum sheet particles separately in PEG 600 liquid according to an implementation solution of this application (m = grinding, Alp = aluminum powder, SA = stearic acid, 1 = 1 hour's grinding time, 2 = 2 hours' grinding time, 4 = 4 hours' grinding time, 50wt% = weight content of the aluminum sheet particle in the composite material);
FIG. 6 shows physical appearance differences between aluminum sheet particles that are obtained after 4 hours of grinding with surfaces modified by using a fatty acid and raw material aluminum powder in a dry powder state, and their physical appearance differences after they are dispersed separately in PEG 600 according to an implementation solution of this application;
FIG. 7 is a diagram of chemical structures of saturated LCFA and unsaturated LCFA used for surface modification of an aluminum sheet particle according to an implementation solution of this application;
FIG. 8 shows a chemical structure and a hydrolysis reaction of tetraethyl orthosilicate (TEOS) used according to an implementation solution of this application;
FIG. 9 shows SEM images of aluminum sheet particles with different molar ratios of silicon dioxide to aluminum according to an implementation solution of this application;
FIG. 10 shows real parts of complex dielectric constants of aluminum sheet particles in a dry powder form with different molar ratios of silicon dioxide to aluminum that are measured by using a solid dielectric assessment kit (DAK, see the section "Details and method for measuring the dielectric properties" in the following descriptions) according to an implementation solution of this application;
FIG. 11 shows measured real parts of complex dielectric constants and loss tangent of composite materials that are prepared by dispersing the aluminum sheet particles with different molar ratios of silicon dioxide to aluminum shown in FIG. 9 and raw material aluminum sheet particles (without any silicon dioxide shell) separately in PEG 600 liquid according to an implementation solution of this application;
FIG. 12 shows a road map for preparing a double-coated aluminum sheet particle according to an implementation solution of this application;
FIG. 13 shows measured real parts of complex dielectric constants and loss tangent of composite materials that are prepared by dispersing m-SAlp2.5-SA4 aluminum sheet particles prepared according to FIG. 12, raw material aluminum sheet particles (Alf), and SAlf_{2.5} aluminum sheet particles coated with silicon dioxide that are prepared by using raw material aluminum sheet particles separately in PEG 600 liquid according to an implementation solution of this application;
FIG. 14 is a diagram of an example of a size of an aluminum sheet particle according to an implementation solution of this application;
FIG. 15A and FIG. 15B show a complex dielectric constant spectrum (real parts of complex dielectric constants and loss tangent) of a solid composite material 1 that is obtained by adding an aluminum sheet to a polymer (PS-PIP) according to an implementation solution of this application;
FIG. 16 shows a comparison of real parts of dielectric constants and loss tangent before and after (0 and 20wt%) an aluminum sheet is added to a PS + TiAlC + Alf composite material according to an implementation solution of this application;
FIG. 17 shows an optimized manufacturing process of preparing a composite material by using a liquid material according to an implementation solution of this application;
FIG. 18 shows a relationship between dielectric properties of a liquid polymer composite material 1 and a change in aluminum particle content according to an implementation solution of this application;
FIG. 19 is a normalized diagram of dielectric relaxation of a liquid polymer composite material 1 that increases as content of an aluminum filler increases according to an implementation solution of this application;
FIG. 20 shows a solid dielectric assessment kit used according to an implementation solution of this application; and
FIG. 21 shows a liquid dielectric assessment kit used according to an implementation solution of this application.

### DESCRIPTION OF EMBODIMENTS

In the context of descriptions of this application (especially in the context of the following claims), unless otherwise stated in this specification or there is an obvious conflict with the context, the terms "one/a" and "this/the" and similar use shall be construed as covering singular and plural forms. Unless otherwise stated, the terms "contain", "have", "include", and "including" shall be construed as open terms (namely, "including but not limited to"), and shall also include partially closed or closed terms "basically consisting of" and "consisting of". Unless otherwise stated, the term "and/or" means either or both. For example, "A and/or B" means only A, only B, or both A and B. Unless otherwise stated in this specification, presentation of a numerical range in this specification is intended only as a simplified method for independently mentioning each individual value that falls within the range, and each individual value is incorporated into this specification as if it were independently presented in this specification.

In this specification, for a standard circle, a "diameter" means a length of a line segment that is of a straight line passing through a center of the circle and that is intersected by two points on a circumference of the circle; and for a non-standard circle or another planar shape, the "diameter" means an equivalent diameter corresponding to a diameter of a circle that has a same area.

In this specification, for a standard spherical particle, a "particle diameter" means a length of a line segment that is of a straight line passing through a center of the spherical particle and that is intersected by two points on a sphere; and for a non-standard spherical particle or another three-dimensional shape, the "particle diameter" means an equivalent particle diameter corresponding to a diameter of a spherical particle that has a same volume.

Unless otherwise stated in this specification or there is an obvious conflict with the context, all methods described in this specification may be performed in any appropriate order. Unless otherwise stated, use of any and all examples or example languages (for example, "such as") provided in this specification is merely intended to better illustrate this application, and does not constitute any limitation on the scope of this application. No any language in this specification should be construed as indicating that any element that does not claim protection is needed for practice of this application.

This specification describes preferred implementations of this application, including a best manner of implementing this application known to the inventor. After previous descriptions are read, changes to those preferred implementations may become apparent to a person of ordinary skill in the art. The inventor expects that a person skilled in the art may appropriately make such changes, and the inventor expects that this application may be implemented in a manner different from those specifically described in this specification. Therefore, this application covers all modifications and equivalents of the subject matter presented in the appended claims as permitted by applicable laws. In addition, unless otherwise stated in this specification or there is an obvious conflict with the context, this application covers any combination of all possible variations of the foregoing elements.

This application provides a method for preparing a non-spherical particle by using simple processing technologies and low-cost raw material powder, and a method for significantly improving a dielectric constant of a composite material to a desired level by using the non-spherical particle while reducing dielectric loss tangent of the composite material. This application also relates to a composite material with improved dielectric properties (for example, the dielectric constant, relaxation, and loss tangent). This application includes a new method for improving and controlling dielectric properties of a composite material, and a new method for manufacturing/processing a non-spherical particle used for improving and controlling the dielectric properties of the composite material. The composite material may be in various physical forms, including a solid form, a liquid form, a semi-solid form, and a liquid-solid mixed form. The non-spherical particle with particular element composition, a particular form, and surface modification may be prepared and added to a variety of matrix materials (for example, polymer matrix materials), to generate composite materials with significantly improved dielectric properties. This application relates to preparation of a particle that can be used to prepare a dielectric composite material. The dielectric composite material has a significantly improved dielectric constant or a dielectric constant allowed to reach a desired level, and relaxation allowed to be enhanced if needed. In addition, dielectric loss tangent may be reduced in a counterintuitive manner.

Application scenarios of this application include a case in which miniaturization of an electronic device is required (for example, implemented by using a material with a high dielectric constant) while a low loss is maintained, and a case of a material that is related to a radio frequency device and has strong dielectric relaxation. This application may also be applied to an existing dielectric material, to improve a dielectric constant or reduce loss tangent as needed (for example, to improve efficiency/performance of a device). This application has a wide scope of application. It is applicable to a solid, liquid, semi-solid, or liquid-solid hybrid form, and may be widely applied to fields such as a communication network, big data, the Internet of things, artificial intelligence, telemedicine, unmanned driving, industrial automation, and a data center. For example, a product according to this application may be any dielectric composite material used for energy storage and collection, device cooling, an electronic circuit, a sensor, an actuator, high-power application, and an antenna. For example, in an antenna, the composite material according to this application may be used as a filler for a metal edge antenna of a smartphone, to increase bandwidth and reduce a device size.

### Non-spherical particle

Many metallic, metalloid, alloy, carbide, ceramic, and carbon-based particles can be used to improve the dielectric constant, but only a minority of particular metal/metalloid/alloys can also reduce the loss tangent.

In some implementation solutions, this application provides a non-spherical particle. The non-spherical particle has a first dimensional size, a second dimensional size, and a third dimensional size. The first dimensional size is between 0.01 µm and 1 µm, a ratio of the first dimensional size to the second dimensional size is between 1/10 and 1/1200, and the third dimensional size is between the first dimensional size and the second dimensional size. The non-spherical particle includes one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). A surface of the non-spherical particle is coated with a surfactant. The surfactant is one or more of a fatty acid, an organosilicon compound, and a combination thereof.

In some specific implementation solutions, the first dimensional size is within a range including any two of the following values as endpoints: 0.01 µm, 0.02 µm, 0.03 µm, 0.04 µm, 0.05 µm, 0.06 µm, 0.07 µm, 0.08 µm, 0.09 µm, 0.1 µm, 0.2 µm, 0.3 µm, 0.4 µm, 0.5 µm, 0.6 µm, 0.7 µm, 0.8 µm, 0.9 µm, and 1.0 µm. Preferably, the first dimensional size is between 0.05 µm and 0.5 µm. Preferably, an average value of the first dimensional size is between 0.05 µm and 0.5 µm, preferably about 0.1 µm.

In some specific implementation solutions, the ratio of the first dimensional size to the second dimensional size is within a range including any two of the following values as endpoints: 1/10, 1/15, 1/20, 1/25, 1/30, 1/35, 1/40, 1/45, 1/50, 1/55, 1/60, 1/65, 1/70, 1/75, 1/80, 1/85, 1/90, 1/95, 1/100, 1/150, 1/200, 1/250, 1/300, 1/350, 1/400, 1/450, 1/500, 1/550, 1/600, 1/650, 1/700, 1/750, 1/800, 1/850, 1/900, 1/950, 1/1000, 1/1050, 1/1100, 1/1150, and 1/1200. Preferably, the ratio of the first dimensional size to the second dimensional size is between 1/20 and 1/1000.

In some specific implementation solutions, the second dimensional size is within a range including any two of the following values as endpoints: 0.1 µm, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 150 µm, 200 µm, 250 µm, 300 µm, 400 µm, 500 µm, 600 µm, 700 µm, 800 µm, 900 µm, 1000 µm, 1100 µm, and 1200 µm. Preferably, the second dimensional size is between 5 µm and 15 µm. Preferably, an average value of the second dimensional size is between 5 µm and 15 µm, preferably about 10 µm.

According to this application, the third dimensional size is between the first dimensional size and the second dimensional size. Specifically, the third dimensional size may be the same as or close to the first dimensional size, or may be the same as or close to the second dimensional size, or may be in a range of a middle value between the first dimensional size and the second dimensional size. When the third dimensional size is the same as or close to the first dimensional size, the non-spherical particle in this application may be slender on the whole. When the third dimensional size is the same as or close to the second dimensional size, the non-spherical particle in this application may be in a thin sheet shape on the whole. In some specific implementation solutions, the third dimensional size is within a range including any two of the following values as endpoints: 0.01 µm, 0.02 µm, 0.03 µm, 0.04 µm, 0.05 µm, 0.06 µm, 0.07 µm, 0.08 µm, 0.09 µm, 0.1 µm, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 15 µm, 20 µm, 25 µm, 30 µm, 35 µm, 40 µm, 45 µm, 50 µm, 55 µm, 60 µm, 5 µm, 6 µm, 7 µm, 8 µm, 9 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 150 µm, 200 µm, 250 µm, 300 µm, 400 µm, 500 µm, 600 µm, 700 µm, 800 µm, 900 µm, 1000 µm, 1100 µm, and 1200 µm.

In this specification, a size (for example, the first dimensional size, the second dimensional size, and the third dimensional size) of the particle may be determined by using a plurality of methods, for example, a screening method, a microscopic (image) method, a sedimentation method, a resistance method, a photoresist method, a laser diffraction method, a dynamic light scattering method, an electron microscope method, an ultrasonic method, and a surface area comparison method. In some implementation solutions, the size of the particle is determined by using the electron microscope method. Measurement of the size of the particle by using an electron microscope is usually achieved by obtaining an image of the particle. A measurement error is mainly caused by a magnitude of a particle detection range. To reduce the error, measurement needs to be performed by using photos on a plurality of sides of a given pattern. There are two types typically: a scanning electron microscope (SEM) and a transmission electron microscope (TEM). A lower limit of measurement is 0.02 µm for the scanning electron microscope, and 0.001 µm for the transmission electron microscope. Combining the electron microscope with a modern image analyzer can avoid a human error due to particle computing. A three-dimensional form and a stacking form of the particle can also be observed through the scanning electron microscope. The images and photos provide a strong stereoscopic sense, but resolution is lower than that of the transmission electron microscope. It is difficult to obtain clear images for fine particles. The transmission electron microscope, as a high-resolution high-magnification microscope, is an effective tool for measuring and observing shapes, tissues, and structures of particles. Sizes, granular distributions, and shapes of particles can be determined through observation by using the transmission electron microscope after the particles are evenly dispersed on a copper network having supporting film. Generally, the size of the particle is an average value obtained by averaging sizes that are obtained by randomly selecting a predetermined quantity of samples (for example, 100 samples).

In some implementation solutions, the non-spherical particle includes aluminum (Al).

In some implementation solutions, the non-spherical particle includes one or more of aluminum (Al), an aluminum complex, and an aluminum alloy. In some specific implementation solutions, it is found that an aluminum sheet particle can reduce the loss tangent of various physical forms of dielectric composite materials while improving the dielectric constant and relaxation (if needed).

In some implementation solutions, the aluminum alloy includes aluminum (Al) and any one or more elements of titanium (Ti), magnesium (Mg), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). In some preferred implementation solutions, the aluminum alloy includes one or more of an aluminum-gallium (AlGa) alloy, an aluminum-magnesium (AlMg) alloy, a zinc-aluminum (ZnAl) alloy, a copper-aluminum (CuAl) alloy, and an aluminum-manganese (AlMn) alloy.

In some implementation solutions, the aluminum complex includes one or more of an aluminum-carbon complex, an aluminum-graphene complex, an aluminum-polymer complex (for example, an aluminum-polyester complex, an aluminum-polyurethane complex, or an aluminum-polyethylene complex), an aluminum-metal oxide complex (for example, an aluminum-ferroferric oxide complex), or an aluminum-organic amine complex (for example, an aluminum-hexamethylene tetramine complex).

In some implementation solutions, aluminum is an optimal metal element. Micro-nano aluminum sheets and aluminum-containing fillers in a nano-particle form are best material forms, and their effect may be optimized optionally through surface modification.

The non-spherical particle according to this application may have a regular or irregular shape, for example, an angular shape, an elongated (rod-like, stick-like, or needle-like) shape, a planar (sheet-like) shape, or a combination thereof. In some implementation solutions, the non-spherical particle is one or more of a sheet-like particle, a rod-like particle, a needle-like particles, and a tree-like particle.

Preferably, the non-spherical particle is a sheet-like particle. In a method for determining a planar size (for example, a diameter, a length, or a width) and a thickness of the sheet-like particle, the planar size and thickness of the sheet-like particle may be determined based on a scanning electron microscope photo (SEM photo). For example, a measured value may be obtained based on an image coordinate size in digitalized image data of an SEM photo of the non-spherical particle provided in this application. In addition, an average value may alternatively be determined based on sizes that are obtained from a predetermined quantity of randomly selected samples (for example, 100 samples), and the obtained average value is defined as the planar size or thickness of the sheet-like particle. Preferably, the sheet-like particle has a planar diameter from 5 µm to 60 µm and a thickness from 0.05 µm to 1 µm.

The non-spherical particle in this application is preferably surface-modified. Examples of surface modification include but are not limited to acid treatment and silanization. Surface acid treatment is to prevent surface oxidation of metal (such as aluminum) by using a fatty acid, thereby further improving material performance. Silanization modification means surface treatment for a metal particle by using an organosilicone compound, and an end group of the organosilicone compound such as silane may be selected and/or adjusted according to chemical properties of an insulating matrix (for example, a polymer matrix). A polar matrix benefits from silane having a polar end group (for example, -NH₂ or -OH). For a non-polar matrix, refer to improvement of silane having a similar compatible functional group (for example, a propyl, octyl, or phenylethyl end group). For example, when the end group of silane is propyl, dispersion in a low-polar polymer (for example, PS or PS-PIP) may be improved; or when the end group of silane is a polar end group such as amine (-NH₂) or a hydroxyl group (-OH), the silane may be used to improve a composite material having a high-polar matrix environment.

In some implementation solutions, the fatty acid is a hydrophilic carboxylic acid having a saturated or unsaturated hydrophobic aliphatic carbon chain. Preferably, a quantity of carbon atoms in the hydrophobic aliphatic carbon chain is within a range including any two of the following values as endpoints: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 32, 34, 36, 38, 40, 45, 50, 55, and 60.

In some implementation solutions, the fatty acid is a hydrophilic carboxylic acid having a saturated or unsaturated hydrophobic aliphatic carbon chain of 18 to 22 carbon atoms.

In some implementation solutions, the fatty acid is selected from a stearic acid, a behenic acid, and a combination thereof.

In some implementation solutions, the organosilicone compound is a silane or siloxane compound having a saturated or unsaturated hydrophobic aliphatic carbon chain. Preferably, a quantity of carbon atoms in the hydrophobic aliphatic carbon chain is within a range including any two of the following values as endpoints: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 32, 34, 36, 38, 40, 45, 50, 55, and 60.

In some implementation solutions, the organosilicone compound has at least one saturated or unsaturated hydrocarbyl chain of more than 18 carbon atoms, for example, silane or siloxane having a chain greater than C₁₈ (including but not limited to trimethyl silane, dimethyl chlorosilane, triethyl silane, tripropyl silane, ethyl propyl chlorosilane, trimethoxy silane, triethoxy silane, and pentamethyl disiloxane having a chain greater than Cis).

In some implementation solutions, the surface of the non-spherical particle is further coated with a silicon dioxide shell. The silicon dioxide shell can further reduce the dielectric loss and can be used to adjust the dielectric constant. The adjustment of the dielectric constant by using the silicon dioxide shell includes: increasing or decreasing the dielectric constant by adjusting, according to a dielectric constant desired by a particular application, a molar ratio of silicon dioxide to a body element of the non-spherical particle. Adding the silicon dioxide shells is especially helpful for preparing a material that needs to have a lower loss but does not need to have a high dielectric constant. In addition, the silicon dioxide shell also helps to improve physical properties of the composite material.

In some implementation solutions, the non-spherical particle has a silicon dioxide shell, and a molar ratio of silicon dioxide to a body element of the particle is within a range including any two of the following values as endpoints: 0.1:10, 0.2:10, 0.3:10, 0.4:10, 0.5:10, 0.6:10, 0.7:10, 0.8:10, 0.9:10, 1:10, 1.2:10, 1.4:10, 1.6:10, 1.8:10, 2:10, 2.2:10, 2.4:10, 2.5:10, 2.6:10, 2.8:10, 3:10, 3.2:10, 3.4:10, 3.6:10, 3.8:10, 4:10, 4.2:10, 4.4:10, 4.6:10, 4.8:10, 5:10, 5.2:10, 5.4:10, 5.6:10, 5.8:10, 6:10, 6.5:10, 7:10, 7.5:10, and 8:10. In some specific implementation solutions, the non-spherical particle has a silicon dioxide shell, and a molar ratio of silicon dioxide to a body element of the particle is within a range of 0.4:10 to 5:10.

In some implementation solutions, the non-spherical particle includes aluminum as body metal of the particle, the non-spherical particle has a silicon dioxide shell, and a molar ratio of silicon dioxide to the aluminum is within a range including any two of the following values as endpoints: 0.1:10, 0.2:10, 0.3:10, 0.4:10, 0.5:10, 0.6:10, 0.7:10, 0.8:10, 0.9:10, 1:10, 1.2:10, 1.4:10, 1.6:10, 1.8:10, 2:10, 2.2:10, 2.4:10, 2.6:10, 2.8:10, 3:10, 3.2:10, 3.4:10, 3.6:10, 3.8:10, 4:10, 4.2:10, 4.4:10, 4.6:10, 4.8:10, 5:10, 5.2:10, 5.4:10, 5.6:10, 5.8:10, 6:10, 6.5:10, 7:10, 7.5:10, and 8:10. In some specific implementation solutions, the molar ratio of silicon dioxide to the aluminum in the non-spherical particle falls within a range of 0.4:10 to 5:10, and preferably falls within a range of 0.4:10 to 2:10.

### Preparation of the non-spherical particle

This application provides a method for preparing a filler particle with particular element composition, a particular form, and particular surface chemical properties (as described previously), to significantly improve dielectric properties (in a controllable/adjustable manner) of a composite material by adding the prepared filler particle to the composite material.

In some implementation solutions, this application provides a method for preparing a non-spherical particle. The method includes a step of grinding raw material powder and a surfactant together for 1 to 20 hours to obtain the non-spherical particle. The raw material powder includes one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn). The surfactant is selected from one or more of a fatty acid, an organosilicone compound, and a combination thereof.

Advantageously, the method includes the step of grinding the raw material powder and the surfactant together for a period of time within a range including any two of the following values as endpoints: 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, and 20 hours. In some implementation solutions, the method includes the step of grinding the raw material powder and the surfactant together for 1 to 20 hours, or preferably 2 to 10 hours, or more preferably 3 to 9 hours.

In some implementation solutions, a weight ratio of the raw material powder to the surfactant is within a range of 10:1 to 1:10. More specifically, the weight ratio of the raw material powder to the surfactant is within a range including any two of the following values as endpoints: 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, and 1:10.

In some implementation solutions, the raw material powder includes one or more of aluminum powder, aluminum complex powder, and aluminum alloy powder.

In some implementation solutions, the raw material powder includes aluminum powder.

In some implementation solutions, the fatty acid is a hydrophilic carboxylic acid having a saturated or unsaturated hydrophobic aliphatic carbon chain. Preferably, a quantity of carbon atoms in the hydrophobic aliphatic carbon chain is within a range including any two of the following values as endpoints: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 32, 34, 36, 38, 40, 45, 50, 55, and 60.

In some implementation solutions, the fatty acid is a hydrophilic carboxylic acid having a saturated or unsaturated hydrophobic aliphatic carbon chain of 18 to 22 carbon atoms.

In some implementation solutions, the fatty acid is selected from a stearic acid, a behenic acid, and a combination thereof.

In some implementation solutions, the organosilicone compound is a silane or siloxane compound having a saturated or unsaturated hydrophobic aliphatic carbon chain. Preferably, a quantity of carbon atoms in the hydrophobic aliphatic carbon chain is within a range including any two of the following values as endpoints: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 32, 34, 36, 38, 40, 45, 50, 55, and 60.

In some implementation solutions, the organosilicone compound has at least one saturated or unsaturated hydrocarbyl chain of more than 18 carbon atoms, for example, silane or siloxane having a chain greater than C₁₈ (including but not limited to trimethyl silane, dimethyl chlorosilane, triethyl silane, tripropyl silane, ethyl propyl chlorosilane, trimethoxy silane, triethoxy silane, and pentamethyl disiloxane having a chain greater than C₁₈).

In particular, the surface of the non-spherical particle is coated with the fatty acid and/or the organosilicone compound to help reduce the loss of the composite material. More preferable dielectric properties can be obtained by using the saturated or unsaturated fatty acid having 18 to 22 carbon atoms and/or the organosilicone compound having the saturated or unsaturated hydrocarbyl chain of more than 18 carbon atoms. Optimal dielectric properties can be obtained by using the stearic acid and/or the behenic acid.

According to this application, the grinding may be performed under a dry condition or under a wet condition. In the wet condition, a wetting solvent may be added in a grinding process. The grinding may be performed in any suitable grinding equipment. Preferably, the grinding is performed in a ball mill.

In some implementation solutions, the method includes the step of grinding the raw powder and the surfactant together in the ball mill (for example, a planetary ball mill) for 2 to 10 hours.

In some implementation solutions, a weight ratio of the raw material powder to a grinding ball is 1:10 to 1:60. Specifically, the weight ratio of the raw material powder to the grinding ball may be within a range including any two of the following values as endpoints: 1:1, 1:2, 1:3, 1:4, 1:5, 1:6, 1:7, 1:8, 1:9, 1:10, 1:15, 1:20, 1:25, 1:30, 1:35, 1:40, 1:45, 1:50, 1:55, and 1:60. In some implementation solutions, the weight ratio of the raw material powder to the grinding ball is about 1:30 to 1:40.

In some implementation solutions, the grinding is performed in the presence of a solvent, and the solvent is selected from one or more of toluene, mineral oil, hexane, anhydrous alcohol, acetone, chloroform, dioxane, diethyl ether, ethyl acetate, and a combination thereof.

In some implementation solutions, the grinding is performed in a planetary ball mill.

In some implementation solutions, the method further includes a step of forming a silicon dioxide shell on the surface of the non-spherical particle.

A method for forming the silicon dioxide shell on the surface of the non-spherical particle is not specifically limited, and a person skilled in the art may select a proper precursor and a corresponding method according to a requirement.

In some implementation solutions, the precursor for forming the silicon dioxide shell is selected from tetraethyl orthosilicate (also referred to as "tetraethoxysilane"), tetrapropyl orthosilicate, tetraisopropyl orthosilicate, tetrabutyl orthosilicate, tetraisobutyl orthosilicate, tetratert butyl orthosilicate, tetrakis (methoxyethoxy) silane, sodium silicate (water glass), colloidal silicon dioxide, and gas phase silicon dioxide.

In some implementation solutions, the silicon dioxide shell is formed on the surface of the non-spherical particle after a body of the non-spherical particle and the precursor (for example, tetraethyl orthosilicate (TEOS)) of the silicon dioxide shell react with each other under a condition of water and the presence of an optional acid/alkaline catalyst. In this method, the silicon dioxide shell whose thickness can vary may be formed by adjusting a molar ratio between the precursor (for example, TEOS) of the silicon dioxide shell and a body element of the particle. Alternatively, other precursors and methods may be used for forming the silicon dioxide shell.

In some implementation solutions, a molar ratio of silicon in the precursor of the silicon dioxide shell to the body element of the particle is within a range including any two of the following values as endpoints: 0.1:10, 0.2:10, 0.3:10, 0.4:10, 0.5:10, 0.6:10, 0.7:10, 0.8:10, 0.9:10, 1:10, 1.2:10, 1.4:10, 1.6:10, 1.8:10, 2:10, 2.2:10, 2.4:10, 2.5:10, 2.6:10, 2.8:10, 3:10, 3.2:10, 3.4:10, 3.6:10, 3.8:10, 4:10, 4.2:10, 4.4:10, 4.6:10, 4.8:10, 5:10, 5.2:10, 5.4:10, 5.6:10, 5.8:10, 6:10, 6.5:10, 7:10, 7.5:10, and 8:10. In some specific implementation solutions, the molar ratio of the silicon in the precursor of the silicon dioxide shell to the body element of the particle is within a range of 0.4:10 to 5:10, and preferably within a range of 0.4:10 to 2:10.

In some implementation solutions, the non-spherical particle includes aluminum as the body element of the particle, and the molar ratio of the silicon in the precursor of the silicon dioxide shell to the aluminum is within a range including any two of the following values as endpoints: 0.1:10, 0.2:10, 0.3:10, 0.4:10, 0.5:10, 0.6:10, 0.7:10, 0.8:10, 0.9:10, 1:10, 1.2:10, 1.4:10, 1.6:10, 1.8:10, 2:10, 2.2:10, 2.4:10, 2.6:10, 2.8:10, 3:10, 3.2:10, 3.4:10, 3.6:10, 3.8:10, 4:10, 4.2:10, 4.4:10, 4.6:10, 4.8:10, 5:10, 5.2:10, 5.4:10, 5.6:10, 5.8:10, 6:10, 6.5:10, 7:10, 7.5:10, and 8:10. In some specific implementation solutions, the molar ratio of the silicon in the silicon dioxide shell precursor to the aluminum is within a range of 0.4:10 to 5:10, and preferably within a range of 0.4:10 to 2:10.

For example, when the body of the particle includes aluminum and TEOS is used as the precursor of the silicon dioxide shell, a molar ratio of the TEOS to the aluminum may be 0.4:10 to 5:10. When the molar ratio of the TEOS to the aluminum is greater than or equal to 1:10, a complete silicon dioxide shell can be formed, and no metal surface is exposed. The thickness of the silicon dioxide shell is negatively correlated with improvement of the dielectric constant. The non-spherical particle having the silicon dioxide shell can further reduce loss tangent of the composite material. In other words, by adjusting the thickness of the silicon dioxide shell, the dielectric constant of the composite material can be controllably improved while the loss tangent of the composite material is reduced. In addition, the silicon dioxide shell also helps improve physical properties of the composite material.

According to an implementation solution of this application, surface treatment is performed on the non-spherical particle by combining surface modification by using the surfactant and forming the silicon dioxide shell. Preferably, the surface is first modified by adding the surfactant (for example, a fatty acid, an organosilicone compound, or a combination thereof) in the grinding process, and then a silicon dioxide (SiO₂) coating is formed on the surface of the non-spherical particle. The coating can control a level of dielectric constant improvement while maintaining (or even improving) a loss reduction capability. This is very helpful when a low-loss material is needed while the dielectric constant does not increase significantly.

Aluminum sheet particles are usually used in the pigment and paint industries. Although aluminum sheet particles are cheap and available on the market, the aluminum sheet particle prepared by using the new method according to this application can ensure that the purity, surface material, repeatability and processing conditions of the aluminum sheet particle can provide desired dielectric properties for the composite material. It is found through research that an aluminum sheet particle providing optimal dielectric properties can be produced through fine control of the grinding conditions for preparation of a composite material by using the aluminum sheet particle. These conditions include the grinding time, the type and weight percentage of the surfactant, the ratio of the grinding ball to the raw material powder, and whether the grinding process is a dry method or a wet method (for example, whether the grinding is performed in a solvent).

### Dielectric composite material

This specification describes preparation and functions of a particular metal particle (for example, an aluminum sheet particle) having a particular element, shape, and size and chemical properties of a surface, thereby significantly improving the dielectric constant (to a desired level) and significantly reducing the loss tangent in a counterintuitive manner. With the non-spherical particle according to this application, a low-loss dielectric composite material having a required dielectric constant and/or relaxation level can be produced by simply controlling a weight percentage of the non-spherical particle and a thickness of a surface coating of the non-spherical particle.

Therefore, this application further provides a dielectric composite material. The dielectric composite material includes the foregoing non-spherical particle according to this application. The dielectric composite material has a dielectric constant improved under control, reduced loss tangent, improved dielectric relaxation, and/or other improved physical properties. The dielectric composite material may be in a solid state, a liquid state, a semi-solid state and/or a liquid-solid mixed state. The composite material may be used in various scenarios in which particular or customized dielectric properties are needed, such as energy storage and collection, device cooling, an electronic circuit, a sensor, an actuator, high-power application, and an antenna.

A matrix material of the dielectric composite material is not specifically limited in this application, and may be metal, ceramic, a polymer, or any combination thereof. Generally, any form of matrix material is applicable to this application, provided that the matrix material can be mixed with the non-spherical particle in this application and does not generate an adverse reaction with the non-spherical particle.

In some implementation solutions, the matrix material of the dielectric composite is a polymer, and the non-spherical particle is dispersed in the polymer matrix.

In some implementation solutions, the polymer may be selected from one or more of polyethylene glycol, polyvinyl chloride, polystyrene, polyisoprene, polyethylene oxide, polypropylene oxide, polytetrafluoroethylene, polyvinylidene fluoride, poly (vinylidene fluoride-co-trifluoroethylene), polyethylene, polypropylene, polyester, polyurethane, polyamide, polyimide, polyether ether ketone, and a copolymer thereof. A person skilled in the art may also use another proper type of polymers according to a requirement.

In some implementation solutions, the non-spherical particle is present, based on an amount which is less than 80% of a total weight of the dielectric composite material, in the dielectric composite material. Preferably, the weight content of the non-spherical particle in the dielectric composite material is within a range including any two of the following values as endpoints: 0.5 weight %, 1 weight %, 2 weight %, 3 weight %, 4 weight %, 5 weight %, 6 weight %, 7 weight %, 8 weight %, 9 weight %, 10 weight %, 15 weight %, 20 weight %, 25 weight %, 30 weight %, 35 weight %, 40 weight %, 45 weight %, 50 weight %, 55 weight %, 60 weight %, 65 weight %, 70 weight %, 75 weight %, and 80 weight %.

In some preferred implementation solutions, the non-spherical particle is present, based on an amount which is 5% to 60% of a total weight of the dielectric composite material, in the dielectric composite material.

In some implementation solutions, the dielectric composite further includes a silicon dioxide particle. It is further found that, during the preparation of the composite material, adding a silicon dioxide (SiO₂) particle to the non-spherical particle according to this application can reduce the dielectric loss of the composite material, and increase or decrease the dielectric constant in a small amplitude. This is very helpful in manufacturing a material that needs to have a lower loss but does not need to have a high dielectric constant. In addition, dielectric properties of the composite material may be customized or fine-tuned as needed. A diameter of the silicon dioxide (SiO₂) particle may be a nanometer scale or a micrometer scale, for example, may be in a range including any two of the following values as endpoints: 1 nm, 10 nm, 50 nm, 100 nm, 200 nm, 300 nm, 400 nm, 500 nm, 600 nm, 700 nm, 800 nm, 900 nm, 1 µm, 5 µm, 10 µm, 20 µm, 30 µm, 40 µm, 50 µm, 60 µm, 70 µm, 80 µm, 90 µm, and 100 µm. In a specific implementation, the diameter of the silicon dioxide (SiO₂) particle is within a range of 1 nm to 100 µm, and preferably within a range of 5 µm to 80 µm. It is shown in a conventional technology that, when the non-spherical particle in this application is not used but the SiO₂ particle is used alone, usually the dielectric loss and the dielectric constant both are reduced. In contrast, mixing the non-spherical particle in this application with the SiO₂ particle may increase the dielectric constant to some extent while reducing the dielectric loss, which is surprising.

This application further provides a method for preparing a dielectric composite material. The method includes: adding the non-spherical particle according to this application and the optional silicon dioxide particle to a matrix of the composite material.

### Method for regulating the dielectric properties

This application describes the use of a metal particle having a particular element, shape, and size in a dielectric composite material, to significantly increase the dielectric constant and significantly reduce the dielectric loss. It is particularly advantageous that, in this application, the dielectric constant, dielectric relaxation, and/or dielectric loss of the dielectric composite material may be regulated according to a requirement, for example, by adjusting a process of preparing the non-spherical particle and/or adjusting the weight content (%) of the non-spherical particle in the dielectric composite material.

It is further found that, temporarily no other method than the present technology has been found to reduce the loss of the composite material, especially in the case of significantly improving the dielectric constant and/or improving the dielectric relaxation. This finding is directly related to the selection of metal/metalloid elements (for example, aluminum is found to have optimal performance) and shapes of the metal/metalloid particles (for example, sheet particles are found to have significantly higher performance than spherical or irregular spheres), and can be utilized to control dielectric properties of composite materials.

In some implementation solutions, this application provides a method for regulating dielectric properties of a composite material. The method includes: adding the non-spherical particle according to this application to the composite material, or adding the non-spherical particle that is prepared by using the method according to this application. The dielectric properties are one or more of a dielectric constant, dielectric loss tangent, and dielectric relaxation.

In some implementation solutions, the method includes regulating the dielectric properties by adjusting content of the non-spherical particle in the composite material.

In some implementation solutions, the method includes regulating the dielectric properties by adjusting content of a particular element in the non-spherical particle.

In some implementation solutions, the method includes regulating the dielectric properties by adjusting content of the aluminum element in the non-spherical particle.

In some implementation solutions, the method includes regulating the dielectric properties by adjusting content and/or a type of a fatty acid, an organosilicone compound or a combination thereof on a surface of the non-spherical particle.

In some implementation solutions, the method includes regulating the dielectric properties by adjusting a thickness of a silicon dioxide shell of the non-spherical particle, and the thickness of the silicon dioxide shell is adjusted through a molar ratio between a precursor compound of the silicon dioxide shell and a body element of the non-spherical particle.

After the non-spherical particle in this application is added, the dielectric constant of the dielectric composite material can be significantly improved or the dielectric constant of the dielectric composite material can be improved to a desired level. In addition, the relaxation of the dielectric composite material can be improved if needed, and the dielectric loss tangent of the dielectric composite material can be reduced in a counterintuitive manner.

In some implementation solutions, in this application, the dielectric constant and the relaxation of the dielectric composite material may be controlled by controlling a weight percentage of the non-spherical particle (for example, an aluminum sheet particle). This method can be used to improve dielectric properties (including the dielectric constant and the loss tangent) of any composite material, or to bring the dielectric relaxation into a specific material to achieve a dielectric constant that varies with frequencies. Aluminum sheet fillers are found to be most effective in regulating the dielectric properties, and a production process is simple, cost-effective and widely used.

Therefore, the method for regulating the dielectric properties according to this application may include one or more of the following methods: (1) Adjust an amount of the non-spherical particle to be added. Weight content of the non-spherical particle is positively correlated with improvement of the dielectric constant of the composite material, and affects the dielectric relaxation of the composite material. (2) Adjust the composition of the non-spherical particle. Non-spherical particles containing different metal/metalloid elements can have dielectric constants improved to different extent. Adding a particle containing aluminum as a body element to the composite material can bring most significant improvement in the dielectric constant. (3) Adjust a shape of the non-spherical particle. A sheet-like particle can further reduce the dielectric loss of the composite material. Preferably, the sheet-like particle has a planar diameter from 5 µm to 60 µm and a thickness from 0.05 µm to 1 µm. (4) Adjust a processing method of the non-spherical particle. Surface modification of the non-spherical particle by using the fatty acid helps reduce the dielectric loss. Coating the non-spherical particle with a silicon dioxide shell can control the dielectric constant of the composite material to be improved, and further reduce the dielectric loss and improve the physical properties.

A person skilled in the art is capable of making comprehensive adjustment by using the foregoing four methods to obtain desired composite materials and desired properties of the composite materials.

In addition, it is further found that, during the preparation of the composite material, adding a silicon dioxide (SiO₂) particle to the non-spherical particle according to this application can reduce the dielectric loss of the composite material, and increase or decrease the dielectric constant in a small amplitude. This is very helpful in manufacturing a material that needs to have a lower loss but does not need to have a high dielectric constant. In addition, dielectric properties of the composite material may be customized or fine-tuned as needed. Therefore, the method for regulating the dielectric properties according to this application may further include a step of adding a silicon dioxide (SiO₂) particle to the non-spherical particle and then adding the mixed particles to a matrix of the composite material to prepare the composite material, or may include a step of simultaneously adding the non-spherical particle and the silicon dioxide (SiO₂) particle to a matrix of the composite material to prepare the composite material. A diameter of the silicon dioxide (SiO₂) particle may be a nanometer scale or a micrometer scale, for example, may be in a range including any two of the following values as endpoints: 1 nm, 10 nm, 50 nm, 100 nm, 200 nm, 300 nm, 400 nm, 500 nm, 600 nm, 700 nm, 800 nm, 900 nm, 1 µm, 5 µm, 10 µm, 20 µm, 30 µm, 40 µm, 50 µm, 60 µm, 70 µm, 80 µm, 90 µm, and 100 µm. In a specific implementation, the diameter of the silicon dioxide (SiO₂) particle is within a range of 1 nm to 100 µm, and preferably within a range of 5 µm to 80 µm. An amount of use of the silicon dioxide (SiO₂) particle also affects a change of the dielectric properties. Therefore, the dielectric properties can be regulated by adjusting a ratio of the silicon dioxide (SiO₂) particle to the non-spherical particle to satisfy a requirement of a specific application. In addition, adding the silicon dioxide particle also helps improve other physical properties of the composite material.

Therefore, this application provides a novel and universal method for controlling the dielectric properties of the composite dielectric material. In comparison with a conventional technology, this application increases the dielectric constant (for example, based on a weight percentage of a filler) in a controlled manner while reducing the dielectric loss.

### Application

This application may cover different application scenarios to improve existing dielectric composite materials, and in particular, may be used to improve dielectric constants or dielectric relaxation and reduce dielectric losses in various scenarios. Performance of a device can be improved or the device can be miniaturized by improving the dielectric constant, and energy consumption of the device can be reduced by reducing the dielectric loss. Therefore, this application further provides use of the non-spherical particle or the dielectric composite material including the non-spherical particle in preparing a dielectric element. The non-spherical particle and the composite material thereof in this application may be widely applied to fields such as a communication network, big data, the Internet of things, artificial intelligence, telemedicine, unmanned driving, industrial automation, and a data center.

In some implementation solutions, the dielectric element may be selected from one or more of the following: an antenna, a radome, a polymer-ceramic composite dielectric element, a capacitor, a printed circuit board, a sensor, an actuator, a resonator, a waveguide filter, and another dielectric element.

In some implementation solutions, the non-spherical particle in this application may be used as a filling material of an antenna medium, to implement miniaturization and wide-bandwidth response of the antenna by improving dielectric properties of the material. Examples of the antenna include but are not limited to a DRA, a lens antenna, and a mobile phone frame antenna.

In some implementation solutions, the non-spherical particle in this application may be used as a filling material of an existing polymer-ceramic composite material, to further improve material properties and achieve a higher dielectric constant and a lower loss.

In some implementation solutions, the non-spherical particle in this application may be used for a dielectric material in a capacitor, to improve energy density.

In some implementation solutions, the non-spherical particle in this application may be added to a printed circuit board (PCB) material (for example, an FR4 material), to further improve material properties and achieve a higher dielectric constant and a lower loss.

### Embodiments

The following embodiments are illustrative and not limitative for the products and methods described in this specification. Appropriate modifications and adjustments to various conditions, preparations, and other parameters common in the art, and modifications and adjustments apparent to a person skilled in the art according to the content of the present disclosure shall all fall within the scope of this application.

All raw materials used in the following embodiments may be synthesized by using a well-known method or obtained by commercial means. A person skilled in the art can easily understand a synthesis technology and a condition that are used, and all obtained dielectric compositions comply with specifications for electronic chemicals.

### Embodiment 1 Influence of the particle form and the element type on the dielectric properties

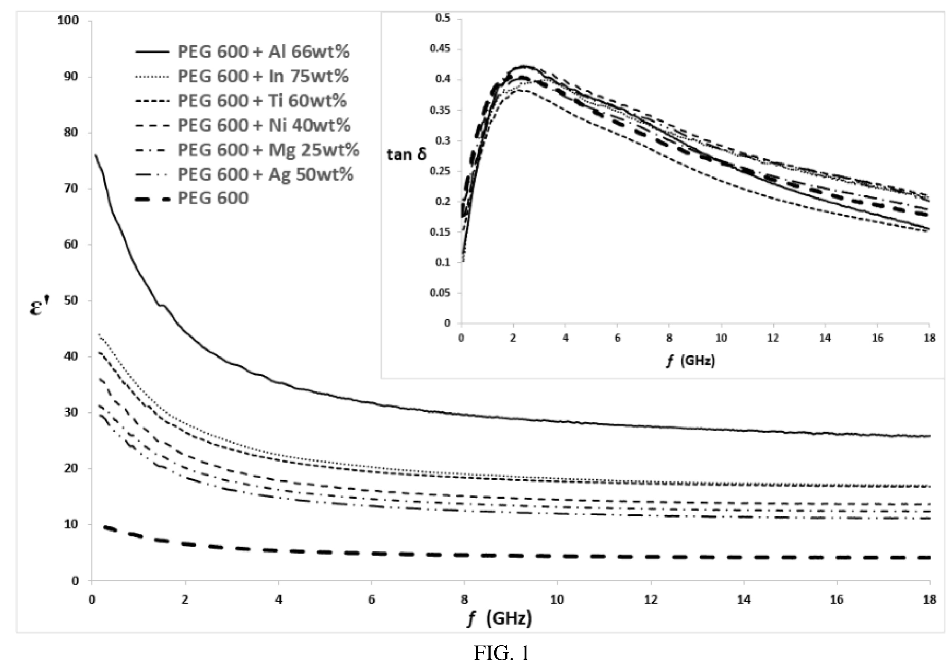

Various types of metal powder including titanium, magnesium, aluminum, nickel, silver, copper, indium, tin, silicon, boron, gallium, zinc, iron, germanium, bismuth, gold, and manganese (irregular spherical particles with an average diameter ranging from 1 µm to 50 µm) can improve the dielectric constant during the preparation of the composite material. FIG. 1 shows measured real parts of complex dielectric constants and loss tangent of composite materials that are prepared by dispersing a series of metal powder (particles having irregular shapes) separately in PEG 600 (polyethylene glycol 600) liquid.

It can be learned from FIG. 1 that aluminum powder provides a maximum dielectric constant compared with other metal powder, but the loss tangent of various metal powder is very close to each other or almost the same.

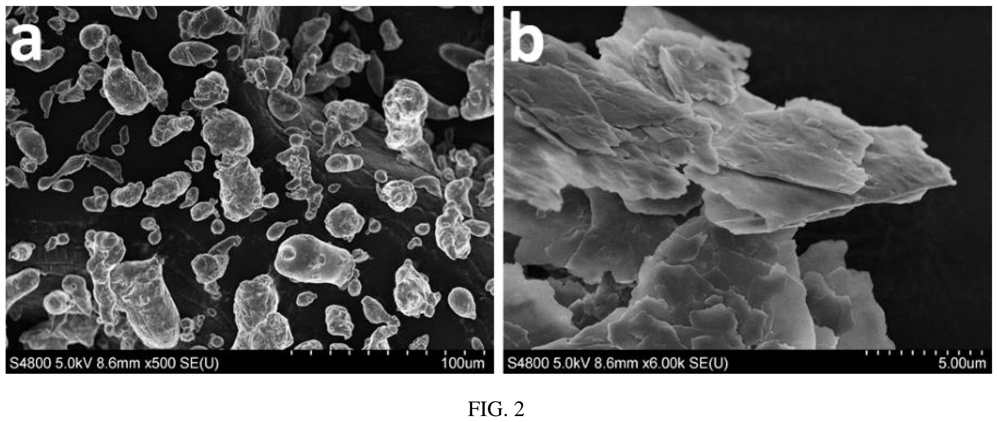

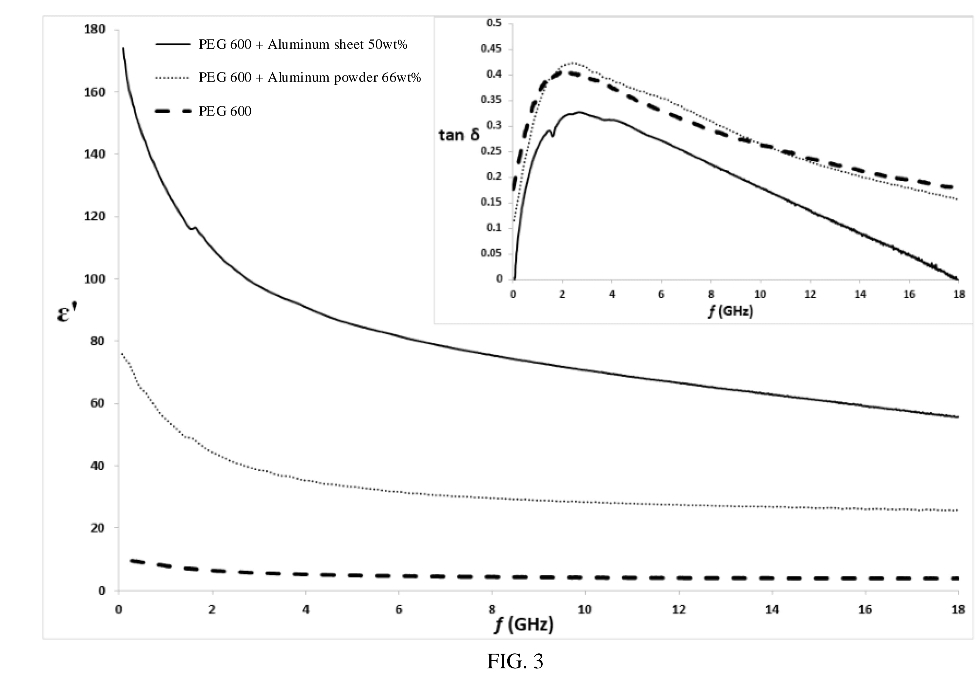

FIG. 2 shows SEM images of aluminum irregular spherical powder particles (a in FIG. 2, where an average grain size is 1 µm to 50 µm) and aluminum sheet particles (b in FIG. 2, with a thickness from 0.1 µm to 1 µm and a planar diameter from 5 µm to 60 µm). Dielectric properties of a composite material prepared by dispersing the two types of particles in PEG 600 (polyethylene glycol 600) liquid are measured. FIG. 3 shows measured real parts of complex dielectric constants and loss tangent of composite materials that are prepared by adding aluminum particles of different forms separately to PEG 600 liquid. PEG 600 is originally a material that has a low dielectric constant and has no relaxation, and the dielectric constant is improved after aluminum is added. As can be learned from FIG. 2 and FIG. 3, the aluminum sheet particle provides a significantly higher dielectric constant and a significantly lower dielectric loss than the aluminum irregular spherical powder particle, even if its weight percentage is low. In other words, an aluminum sheet has a better effect than aluminum powder in improving dielectric properties of the composite material. In particular, the aluminum sheet provides a higher dielectric constant while reducing the loss, while this cannot be provided by the aluminum powder.

A similar tendency of change in dielectric properties is observed when composite materials are prepared by dispersing various commercially available sheet metal particles (with thicknesses from 0.1 µm to 1 µm and planar diameters from 5 µm to 60 µm) and non-sheet powder with a same element separately in PEG 600 (polyethylene glycol 600) liquid. To be specific, in comparison with the non-sheet powder with the same element, the sheet metal particle provides a significantly higher dielectric constant and a significantly lower dielectric loss. It is also found that a sheet-like particle including the 100% aluminum element provides a best effect.

Although aluminum has been proved to have optimal dielectric properties, other metal elements/alloys have also been proved to be effective and can achieve a similar effect in some cases, especially for aluminum alloys, such as an aluminum-gallium (AlGa) alloy.

In this embodiment, a particle shape/form with a maximized metal element effect, namely, a sheet particle, is used. The sheet particle is more effective than a spherical particle with a same element.

### Embodiment 2 Influence of surface modification on the dielectric properties

During preparation of a composite material with an improved dielectric constant and a reduced loss, not only the selection of a metal element serving as a filler and a shape of a filler particle need to be considered, but also chemical properties of a surface of the particle need to be considered. In this embodiment, an aluminum sheet particle is used as an example to study the influence of surface modification of the particle on the dielectric properties of the composite material. Aluminum sheet particles are usually used in the pigment and paint industries. Although aluminum sheet particles are cheap and available on the market, this application proposes a new method for preparing an aluminum sheet particle, to ensure that the purity, surface chemistry, repeatability, and processing conditions of the aluminum sheet particle can provide desired dielectric properties for the composite material. In this embodiment, the aluminum sheet particle is prepared by processing raw material aluminum powder, a surfactant, and a wetting solvent in a planetary ball mill.

Equipment and raw materials used are as follows.
Ball mill: Planetary Mono Mill Poverisette 6 classic series (from Fritsch)
Grinding bowl: hard stainless steel bowl (from Fritsch)
Grinding ball: stainless steel grinding ball (from Fritsch)
Aluminum powder: an average grain size of 1 µm to 50 µm shown in a in FIG. 2
Surfactant: stearic acid
Wetting solvent: toluene
The powder morphology is analyzed through a Hitachi S-4800 cold field emission scanning electron microscope (FE-SEM) after a surface of a sample is gold-coated through a Quorum S150T ES coater.

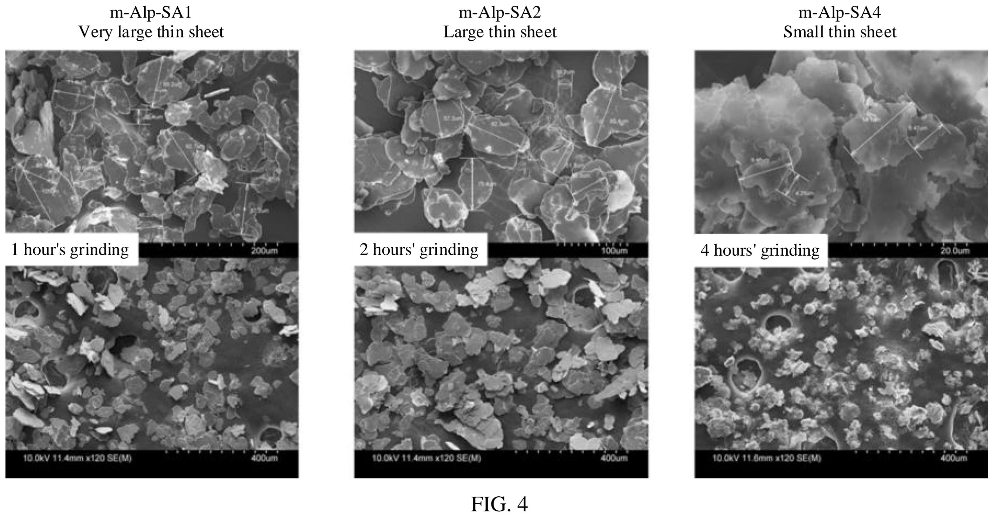

FIG. 4 shows SEM images of aluminum sheet particles that are obtained by grinding raw material aluminum powder, a stearic acid (SA, which is the surfactant), and toluene (which is the wetting solvent) at a grinding speed of 200 to 300 revolutions per minute for 1 hour, 2 hours, and 4 hours separately. A weight ratio of the raw material aluminum powder to the stearic acid is 4:1, and a weight ratio of a grinding ball to the raw material aluminum powder is 40:1. It can be learned that, the aluminum powder is squeezed and flattened into a very large thin sheet within one hour, and a size of the particle reaches 130 µm. The large thin sheet shows a reduced average particle size and thickness 2 hours later. Small thin sheets whose particle sizes are about 4 µm to 12 µm are obtained after the grinding time of 4 hours, and the distribution of the particle sizes is greatly improved. According to the method in this application, a physical form of the aluminum sheet particle obtained after 4 hours of grinding is greatly different from that of the raw material aluminum sheet particle, regardless of whether the aluminum sheet particle is in a dry state or dispersed in PEG 600.

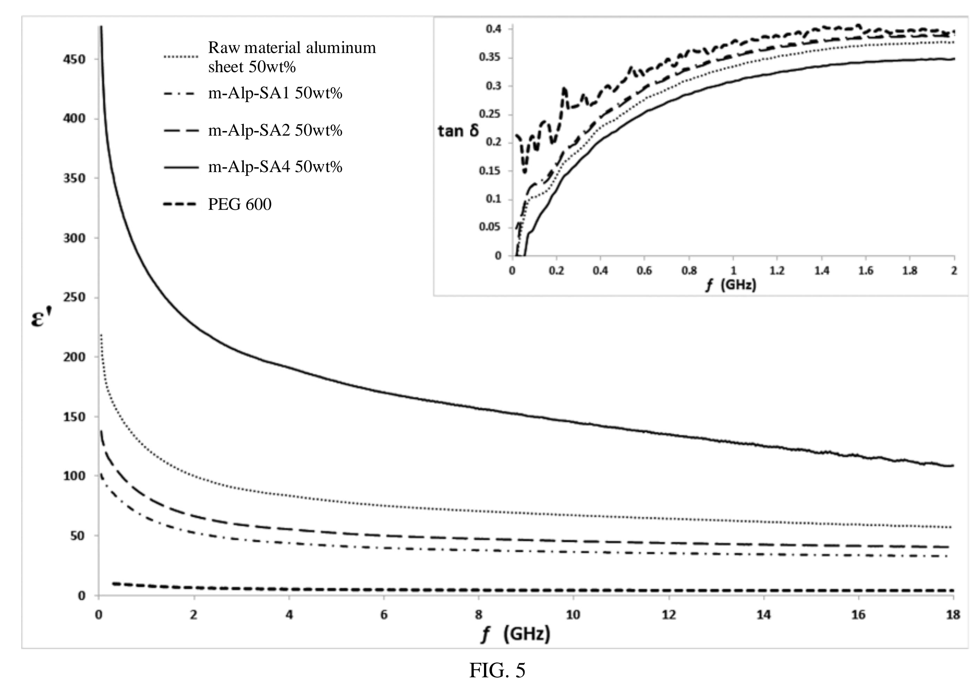

FIG. 5 shows measured real parts of complex dielectric constants and loss tangent of composite materials that are prepared by dispersing the foregoing aluminum sheet particles and raw material aluminum sheet particles (with thicknesses from 0.1 µm to 1 µm and planar diameters from 5 µm to 60 µm) separately in PEG 600 liquid. The influence of the grinding time on the dielectric properties of the aluminum sheet particle or the PEG 600 composite material can be learned from FIG. 5, where "m-Alp-SA1 50wt%" means the composite material obtained by adding, to the PEG 600 liquid, the aluminum sheet particle with weight content of 50wt% that is obtained by grinding the aluminum powder and the stearic acid together for 1 hour (m = grinding, Alp = aluminum powder, SA = stearic acid, 1 = 1 hour's grinding time), and the rest are similar.

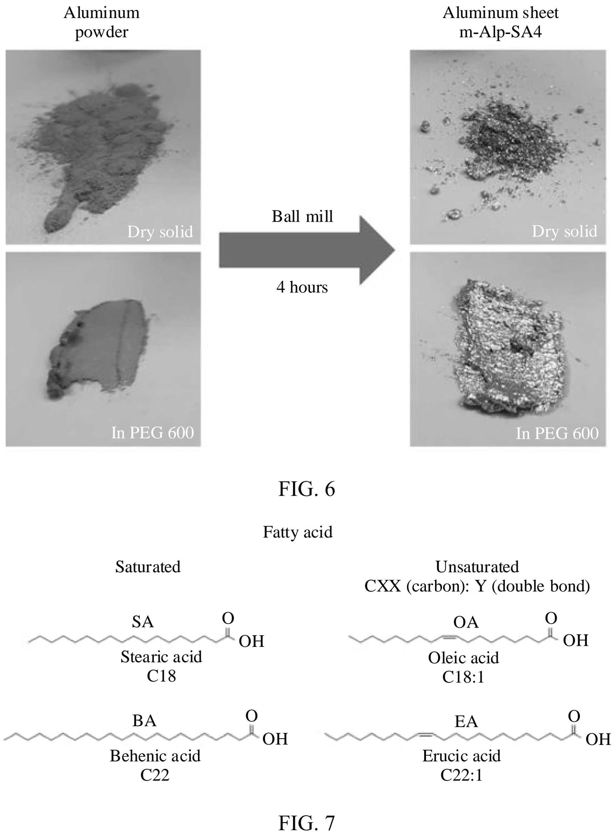

FIG. 6 shows macroscopic shapes of the foregoing raw material aluminum powder and aluminum sheet particles that are obtained after 4 hours of grinding with surfaces modified by using a fatty acid in a dry powder state, and their macroscopic shapes after they are dispersed separately in PEG 600, where their physical appearance differences can be learned.

As is not expected to be constrained by theory, it is believed that the surface of the aluminum sheet particle prepared according to the method in this application is coated with a fatty acid, which plays a role in the performance of reducing the loss. The fatty acid (R-CO₂H) includes a hydrophilic carboxylic acid group and a hydrophobic aliphatic carbon chain with a variable length, and may be saturated or unsaturated. The length of the hydrophobic aliphatic carbon chain in the fatty acid may be of a short chain (≤ 5 carbons, also referred to as a short chain fatty acid or SCFA), a medium chain (6 to 12 carbons, also referred to as a medium chain fatty acid or MCFA), a long chain (13 to 21 carbons, also referred to as a long chain fatty acid or LCFA), or a very long chain (≥ 22 carbons, also referred to as a very long chain fatty acid or VLCFA). FIG. 7 is a diagram of chemical structures of several types of saturated LCFA and unsaturated LCFA.

It is found through research that processing the aluminum sheet particle by using the saturated or unsaturated fatty acid whose carbon chain length is about 18 to 22 carbons can obtain a better dielectric effect, among which the stearic acid (SA) and a behenic acid (BA) provide best dielectric results. In addition, using other surface modifiers having similar large carbon chains (for example, trimethoxy silane having a carbon chain of more than 18 carbon atoms) can also produce a same or similar effect as the fatty acid.

### Embodiment 3 Influence of the silicon dioxide shell on dielectric properties

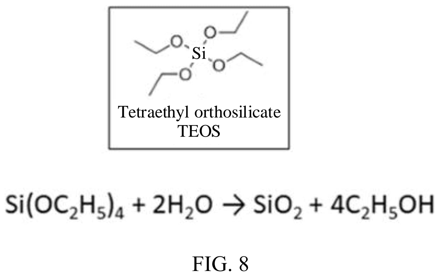

A very high dielectric constant may be helpful for some applications, but sometimes a level to which the dielectric constant is improved needs to be controlled while keeping a decrease in the loss. In this embodiment, an aluminum sheet particle is used as an example to study the influence of coating silicon on the surface of the particle on the dielectric properties of the composite material. It is found that the level to which the dielectric constant of the composite material is improved can be controlled by coating the particle with a silicon dioxide (SiO₂) shell whose thickness may vary. In this embodiment, tetraethyl orthosilicate (TEOS) is used as a precursor of the silicon dioxide. After water is added (optionally using an acid/alkaline catalyst), the tetraethyl orthosilicate (TEOS) can be easily converted into silicon dioxide. Through a series of condensation reactions, the TEOS can form mineral-like solid by forming Si-O-Si bonding (silicon dioxide) on the surface of the metal particle. FIG. 8 shows a chemical structure and a hydrolysis reaction of tetraethyl orthosilicate (TEOS).

A specific preparation process and parameters are as follows.

In a 500 ml round bottom flask, float a raw material aluminum sheet (Alf, as shown in b in FIG. 2, 5 g, 185.32 mmol, a thickness from 0.1 µm to 1 µm, and a planar diameter from 5 µm to 60 µm) in anhydrous alcohol (250 ml, anhydrous alcohol, and purity 99%).

Add TEOS, and adjust a thickness of the silicon dioxide shell through an amount of the added TEOS (for example, for 9.65 g, 10.33 ml and 46.33 mol correspond to TEOS:Alf with a molar ratio of 2.5:10, and 4.13 ml and 18.48 mol correspond to TEOS:Alf with a molar ratio of 1:10).

Heat the mixture to 40°C, and drop or slowly add NH₄OH (28% aqueous solution) to the mixture until pH is 8 to 10.

Stir the mixture for at least 6 hours, and then topple and pour the mixture into a 1L conical bottle, so that silicon dioxide coating particles are precipitated at the bottom. Carefully decant and remove an upper layer of clear liquid (without removing any particle). Add another portion of anhydrous alcohol (250 ml), fully and evenly shake the mixture so that the mixture is precipitated, and decant the upper layer of clear liquid again. Repeat the washing process once.

First, dry the particles at 60°C to remove residual anhydrous alcohol, and then dry the particles intensely at 60°C in vacuum.

### Separate and dry the products.

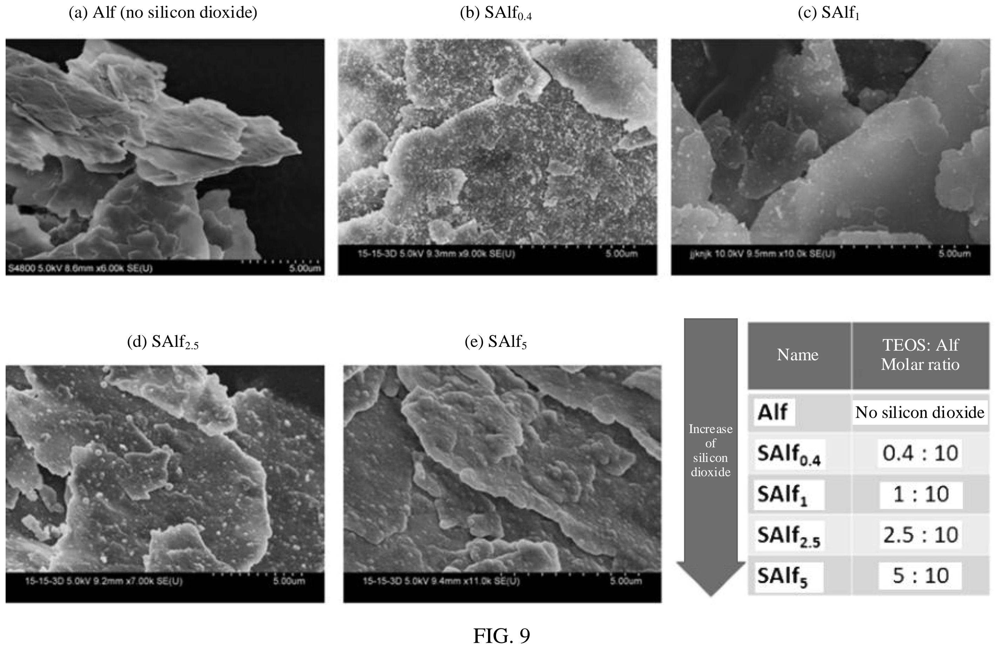

Aluminum sheet particles with different molar ratios of silicon dioxide to aluminum have been prepared. For SEM images of the aluminum sheet particles, refer to FIG. 9. Alf means an untreated raw material aluminum sheet particle (with a thickness from 0.1 µm to 1 µm and a planar diameter from 5 µm to 60 µm) without any silicon dioxide shell (refer to (a) in FIG. 9). SAlf_{0.4} means a silicon dioxide-coated aluminum sheet particle whose molar ratio of silicon dioxide to aluminum is 0.4:10 (refer to (b) in FIG. 9, which shows an incomplete silicon dioxide shell where a surface of a metal aluminum sheet is still partially exposed). SAlf₁ means a silicon dioxide-coated aluminum sheet particle whose molar ratio of silicon dioxide to aluminum is 1:10 (refer to (c) in FIG. 9, which shows that a surface of a metal aluminum sheet is fully covered by a silicon dioxide shell). SAlf_{2.5} means a silicon dioxide-coated aluminum sheet particle whose molar ratio of silicon dioxide to aluminum is 2.5:10 refer to (d) in FIG. 9, which shows that a surface of a metal aluminum sheet is fully covered by a thicker silicon dioxide shell). SAlf₅ means a silicon dioxide-coated aluminum sheet particle whose molar ratio of silicon dioxide to aluminum is 5:10 (refer to (e) in FIG. 9, which shows that a surface of a metal aluminum sheet is fully covered by an even thicker silicon dioxide shell).

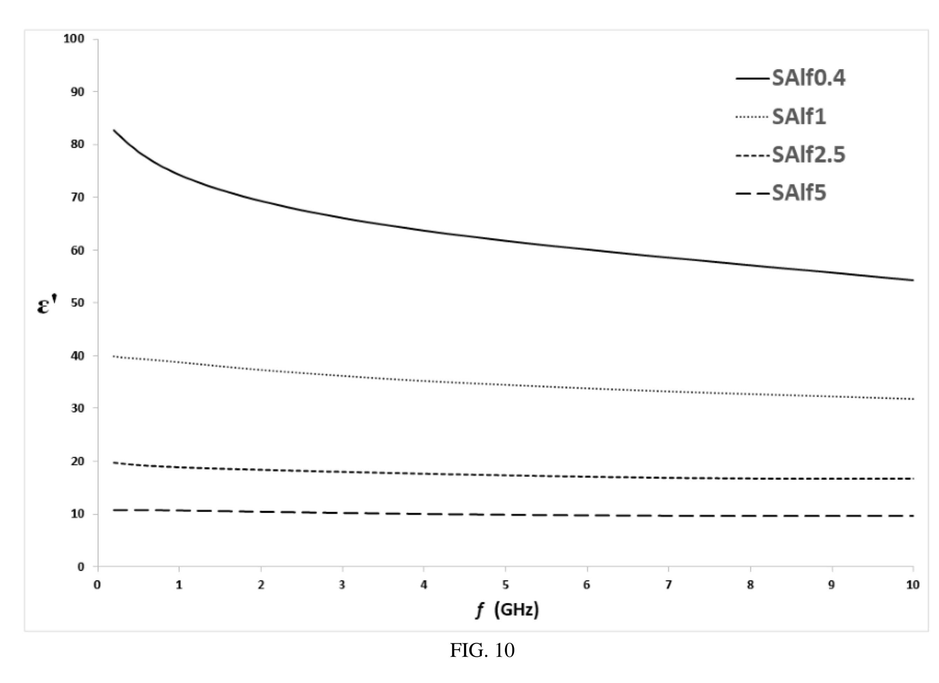

FIG. 10 shows real parts of complex dielectric constants of aluminum sheet particles (SAlf_{0.4-5}) in a dry powder form with different molar ratios of silicon dioxide to aluminum that are measured by using a solid dielectric assessment kit (DAK, see the section "Details and method for measuring the dielectric properties" in the following descriptions). The influence of the thickness of the silicon dioxide coating on the dielectric constant can be learned from FIG. 10. When the molar ratio of silicon dioxide to aluminum is 5:10, a thickest silicon dioxide coating is formed. In this case, the dielectric constant is only ε' = 10. As the molar ratio of silicon dioxide to aluminum decreases, the thickness of the silicon dioxide shell decreases, but a much higher dielectric constant can be obtained. This surface coating method allows for a desired increase or decrease in the dielectric constant simply by adjusting the amount of use of the precursor (for example TEOS) of the silicon dioxide to produce a thin or thick shell.

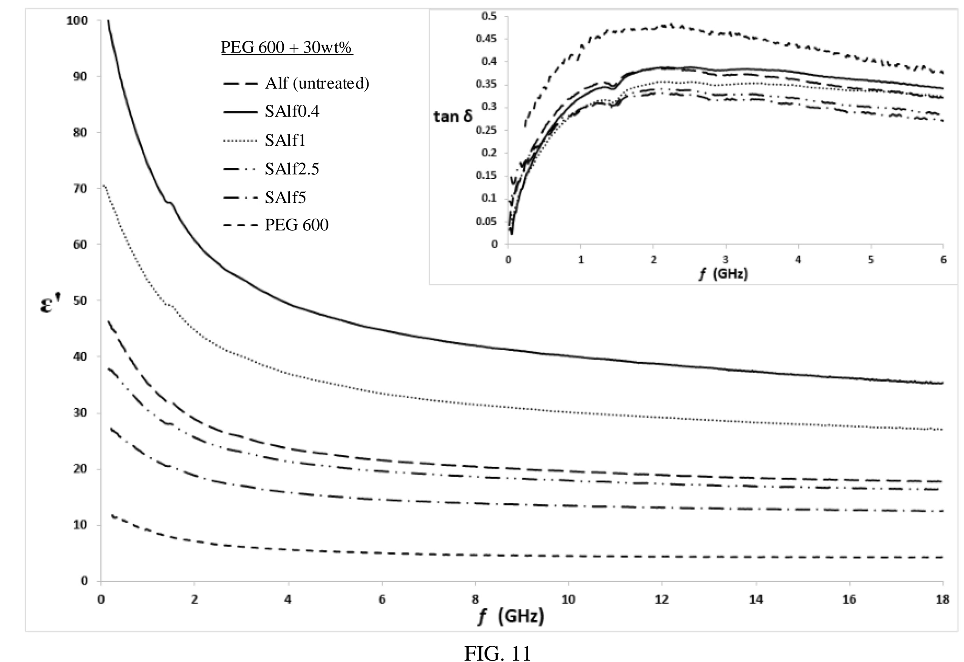

FIG. 11 shows measured real parts of complex dielectric constants and loss tangent of composite materials that are prepared by dispersing the aluminum sheet particles with different molar ratios of silicon dioxide to aluminum and raw material aluminum sheet particles (without any silicon dioxide shell) separately in PEG 600 liquid. For the aluminum sheet particle having the silicon dioxide shell, as the thickness of the silicon dioxide shell changes, the dielectric constant of the composite material shows a same tendency of change as the dielectric constant observed in a form of aluminum sheet particle dry powder in FIG. 10, that is, the dielectric constant increases as the thickness of the silicon dioxide shell decreases. It can be further learned from FIG. 11 that, when the molar ratio of silicon dioxide to aluminum is greater than 2.5:10 (refer to SAlf_{2.5} and SAlf₅ in FIG. 11), the dielectric constant of the prepared composite material is even lower than that of a composite material prepared by using an aluminum sheet particle (namely, untreated Alf) without any silicon dioxide shell. In addition, it can be further learned from FIG. 11 that, an increase in the thickness of the silicon dioxide shell causes a decrease in the loss tangent. SAlf_{0.4} has loss tangent similar to that of the untreated Alf. In addition, SAlf₁, SAlf_{2.5}, and SAlf_{0.4} provide successively lower loss tangent.

In this embodiment, commercially available mass-produced aluminum sheets (for example, nano aluminum sheets) are used, and it has been proved that the performance of the material can be further improved by using a customized manufacturing process (for example, by adding the silicon dioxide shell).

### Embodiment 4 Influence of a combination of surface modification and the silicon dioxide shell on the dielectric properties

As mentioned previously, the aluminum sheet particle prepared by using aluminum powder as the raw material and performing surface modification with a fatty acid (for example, the stearic acid SA) provide a shining thin metal sheet in a best form, and can bring significant improvement in the dielectric constant while reducing the dielectric loss. Coating the untreated aluminum sheet particle with a silicon dioxide shell whose thickness may vary can control the improvement of the dielectric constant to a desired level while maintaining a characteristic of loss reduction.

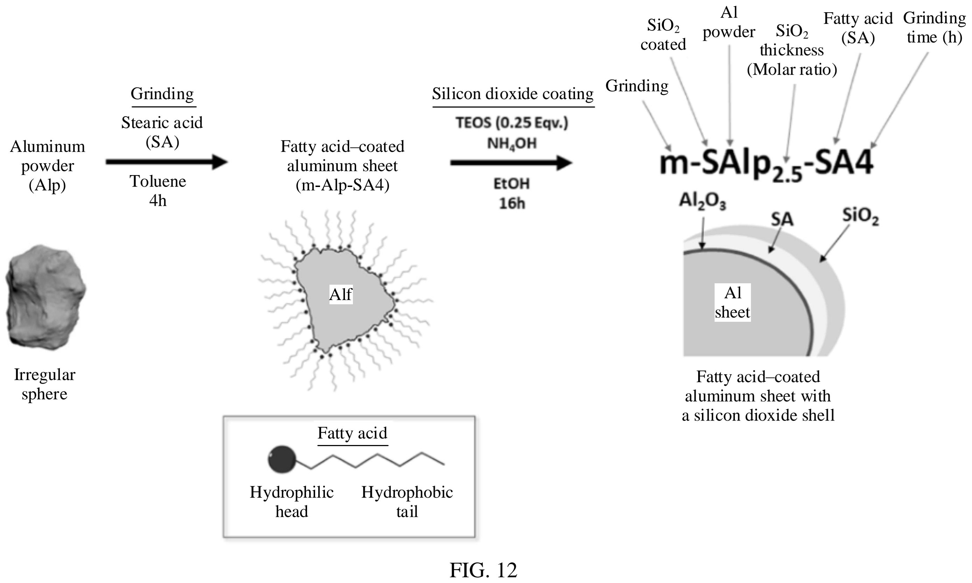

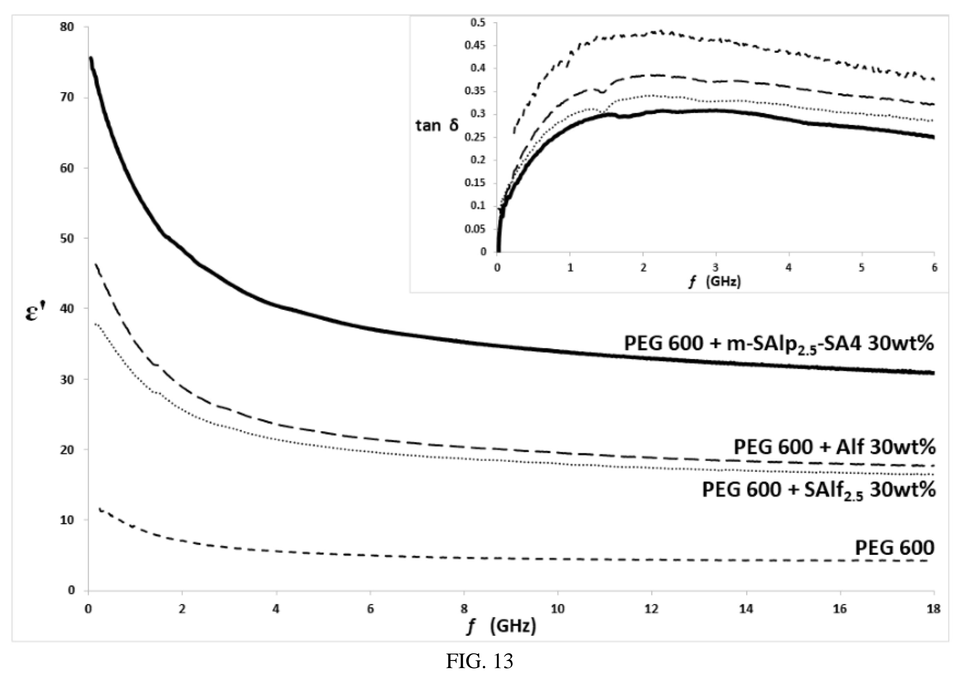

In this embodiment, the foregoing two technologies are combined, that is, an aluminum sheet particle having a fatty acid coating is made by using an irregular spherical aluminum powder particle as a raw material and then coating a surface of the aluminum sheet particle with a silicon dioxide shell. FIG. 12 shows an overall scheme for preparing a double-coated aluminum sheet particle. FIG. 13 shows measured real parts of complex dielectric constants and loss tangent of a composite material that is prepared by dispersing the prepared m-SAlp2.5-SA4 aluminum sheet particles in PEG 600 liquid, and compares them with those of a composite material that is prepared by dispersing untreated raw material aluminum sheet particles in PEG 600 liquid, those of a composite material that is prepared by dispersing SAlf_{2.5} aluminum sheet particles coated with silicon dioxide that are made by using untreated raw material aluminum sheet particles in PEG 600 liquid, and those of the PEG 600 itself. 30wt% is weight content of the aluminum sheet particle in the composite material. As can be learned from FIG. 13, the double-coated aluminum sheet particle, namely, m-SAlp2.5-SA4, provides a highest and controlled dielectric constant (ε' < 100) and a lowest dielectric loss. It can be learned that, in combination with the metal particle having the particular element and shape (and particular surface treatment) according to this application, adding the silicon dioxide shell can produce a positive effect, to not only reduce the dielectric loss but also improve the dielectric constant in a controllable manner. This is different from an effect, as observed in a conventional technology, of reducing a loss but accordingly reducing a dielectric constant by adding a silicon dioxide particle.

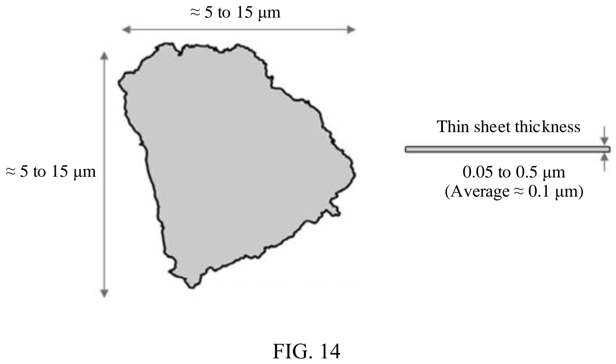

FIG. 14 is a diagram of a size of a non-spherical particle prepared according to an embodiment of this application.

### Embodiment 5 Preparation of the dielectric composite materials

### Solid-state composite material 1 - low-loss frequency-independent dielectric material

Dissolve/float polystyrene-polyisoprene and aluminum sheets (at most 60wt%) with a total mass of 10 g in a 250 ml round bottom flask in toluene (30 ml), and stir them for 1 hour at 80°C in an inert atmosphere. Perform ultrasonic treatment on the mixture at 80°C for 1 hour, and then vacuum dry the solvent. Then, grind the compound mixture into fine powder by using a laboratory-grade grinding machine. Transfer the fine solid powder to a stainless steel mold (with a diameter of 25 mm), and perform pressing at a stress of at most 5 tons. Take the pressed material out of the mold and get ready for dielectric measurement.

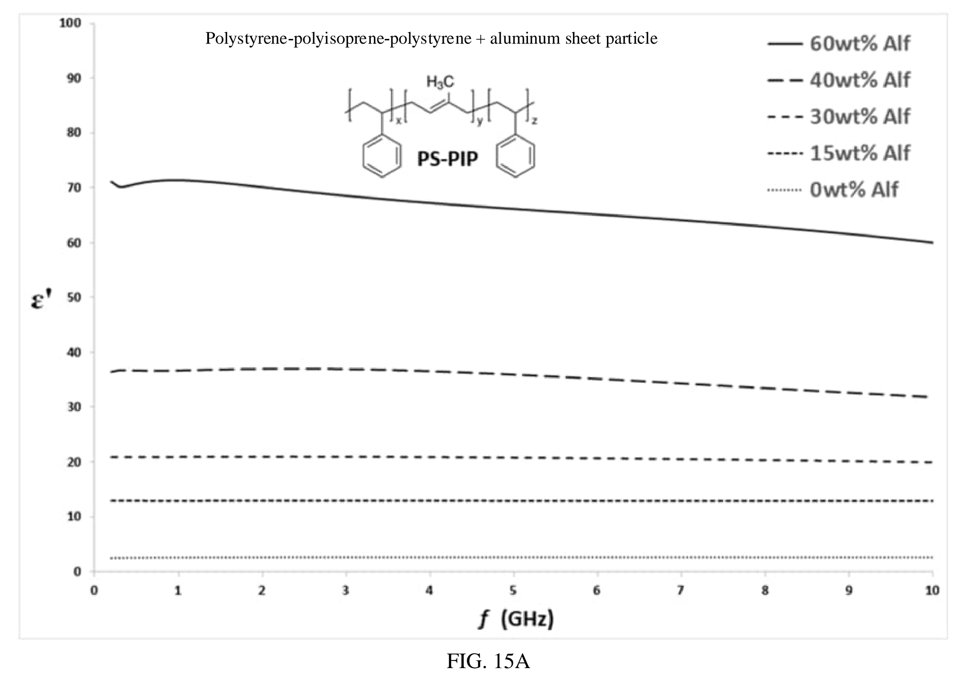

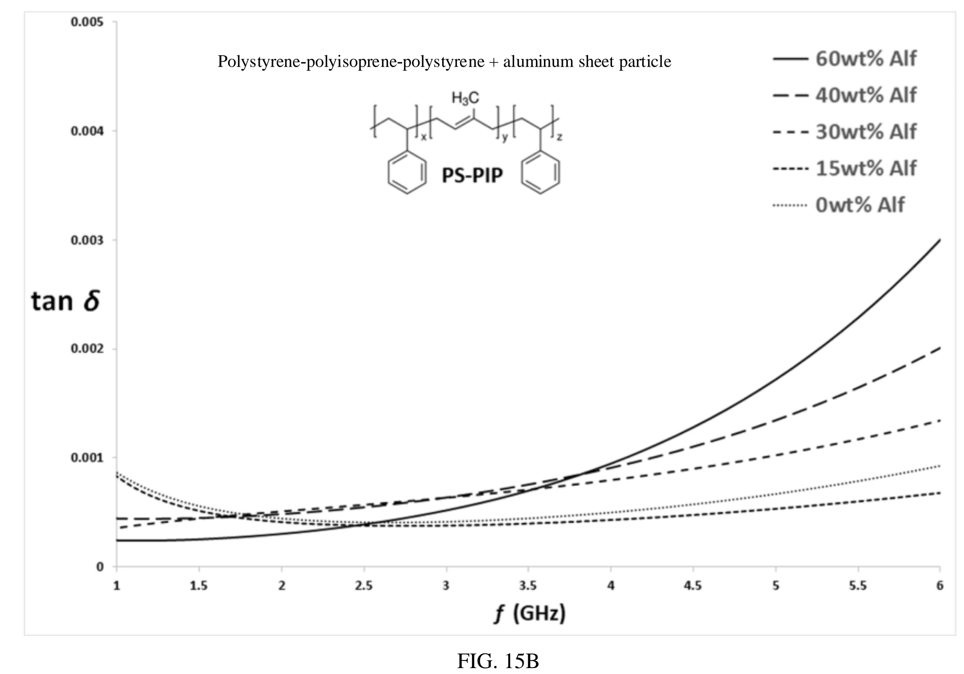

FIG. 15A and FIG. 15B show a complex dielectric constant spectrum of the solid composite material 1 that is obtained by adding an aluminum sheet to a polymer (PS-PIP). A real part of the dielectric constant increases as a percentage of a mass of the aluminum sheet increases, and the loss tangent does not obviously change in a precision range (0.01) of a measuring instrument.

It can be learned that, the solid polymer (polystyrene-polyisoprene copolymer, PS-PIP) whose dielectric constant is independent of frequencies can be regulated by increasing the percentage of the weight of the aluminum sheet in the composite material. Adding the aluminum sheet has significantly increased the dielectric constant of the composite material. For example, the dielectric constant has been increased from about 2.6 to about 70 (increased by about 27 times) for an aluminum sheet filler whose weight content is 60%. The loss tangent of all composite materials shown in FIG. 15A and FIG. 15B is very low, and the loss tangent of a pure polymer matrix is less than 0.001.

### Solid-state composite material 2 - composite material with a frequency-dependent dielectric constant (dielectric relaxation)

Dissolve/float polystyrene (3 g), titanium aluminum carbide (5 g) and an aluminum sheet (2 g) in a 250 ml round bottom flask in toluene (30 ml), and stir them for 1 hour at 80°C in an inert atmosphere. Perform ultrasonic treatment on the mixture at 80°C for 1 hour, and then vacuum dry the solvent. Then, grind the compound mixture into fine powder by using a laboratory-grade grinding machine. Then, transfer the fine solid powder to a stainless steel mold (with a diameter of 25 mm), and perform pressing at a stress of 15 tons. Take the pressed material out of the mold and get ready for measurement.

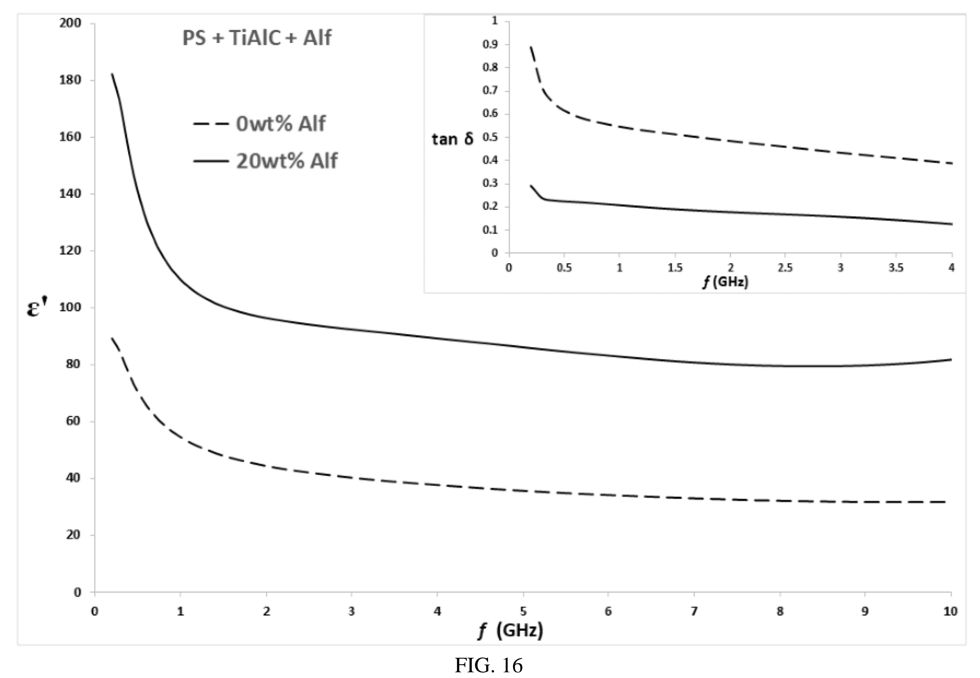

FIG. 16 shows a comparison of real parts of dielectric constants and loss tangent before and after (0 and 20wt%) an aluminum sheet is added to a PS + TiAlC + Alf composite material. It can be learned that adding the 20wt% aluminum sheet to the solid-state composite material with a frequency-dependent dielectric constant (dielectric relaxation) brings doubling of the dielectric constant while significantly reducing the loss by 65%.

### Liquid-state composite material 1 - composite material with a frequency-dependent dielectric constant (dielectric relaxation)

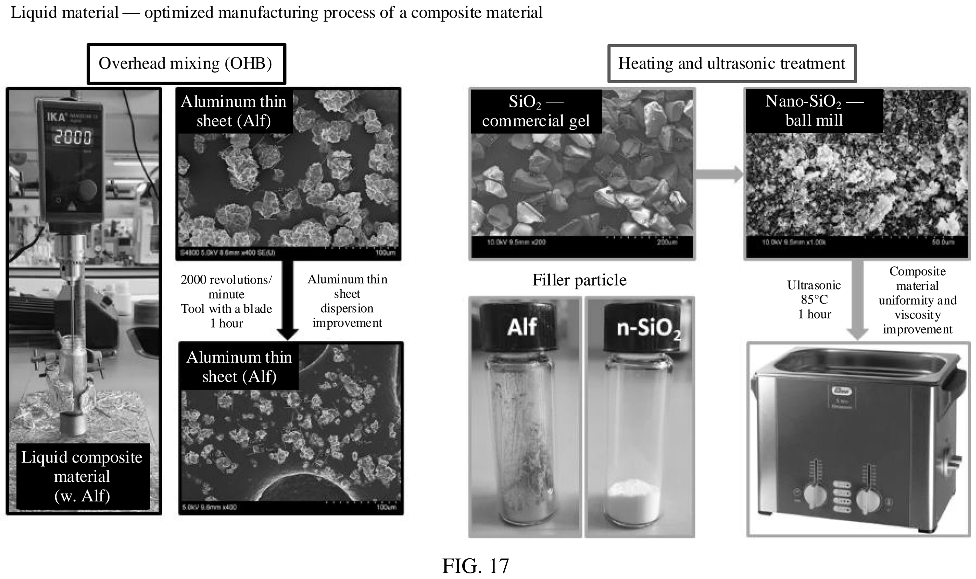

In a 40 ml sample bottle with a PTFE lining lid, dissolve polyethylene oxide (MW 300,000), propylene carbonate (0.8 ml) and N-methylacetamide (2 g) in toluene and stir them intensely at 80°C until transparent uniform viscous liquid is obtained. Add an aluminum sheet (up to a weight percentage of 60%) to the liquid polymer composite material, and mix the mixture at 2000 rpm for 0.5 hours by using an overhead mixer equipped with a blade mixer tool. FIG. 17 shows an optimized manufacturing process of preparing a composite material by using a liquid material.

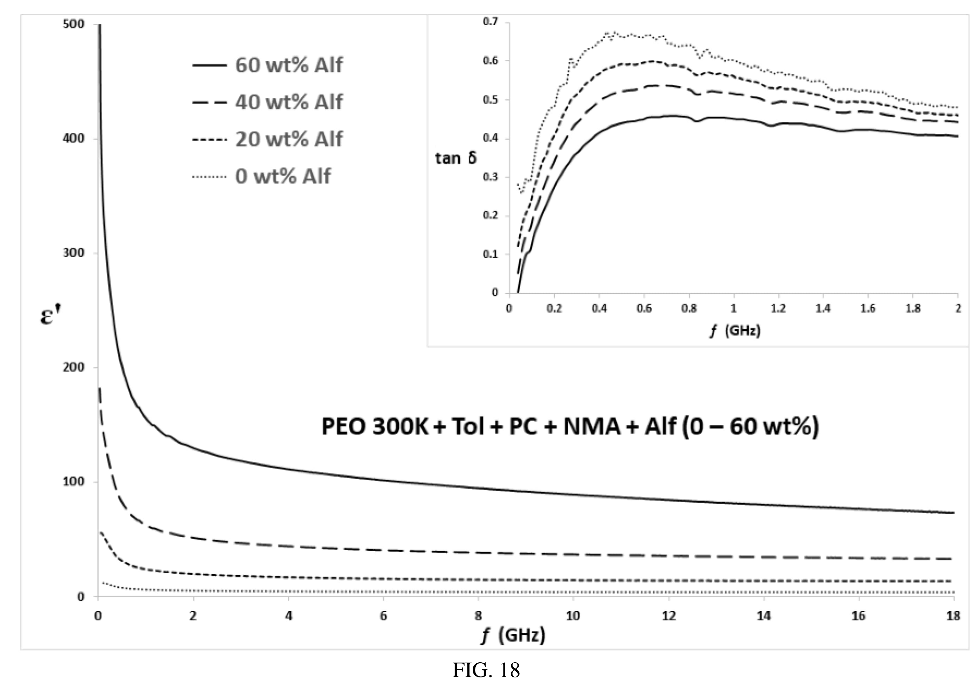

FIG. 18 shows a relationship between dielectric properties of the liquid polymer composite material 1 and a change in aluminum particle content. The dielectric constant increases as the aluminum content increases. The more aluminum is added, the more significant the loss is reduced.

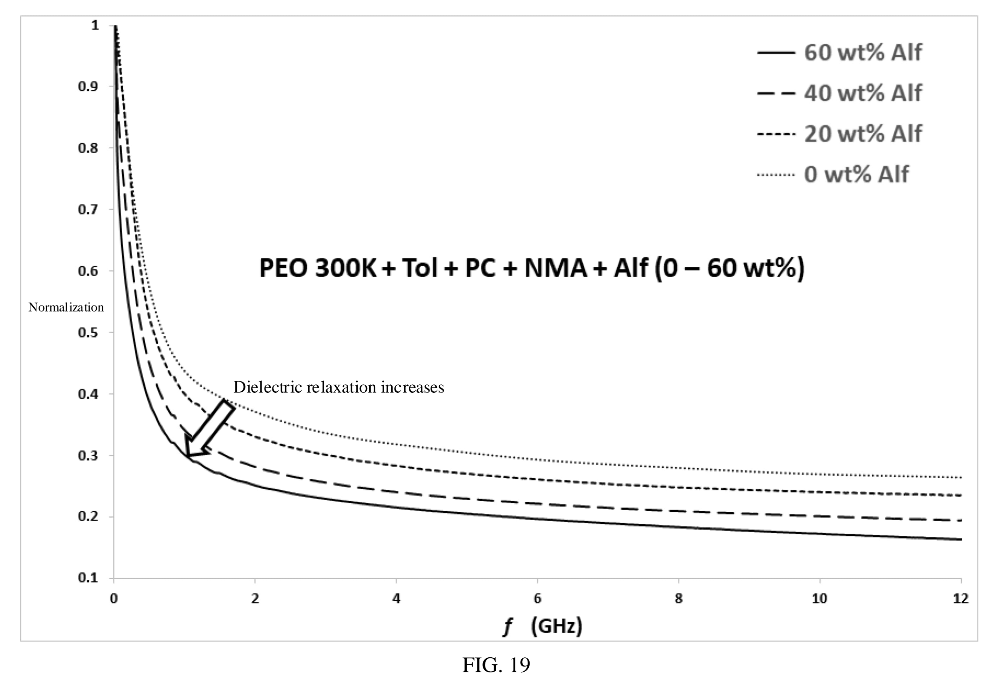

FIG. 19 is a normalized diagram of dielectric relaxation of the liquid polymer composite material 1 that increases as content of an aluminum filler increases.

It can be learned that the dielectric relaxation and the frequency-dependent dielectric constant of the polymer composite material can be regulated by increasing the weight percentage of the aluminum sheet. Adding the aluminum sheet increases the dielectric constant significantly, for example, at the weight percentage of 60%. Two other significant characteristics include an increase in relaxation (see the normalized diagram) and a decrease in the loss tangent, for example, a decrease of about 30% to 40% in the loss tangent in comparison with the pure polymer matrix at the weight percentage of 60%.

### Details and method for measuring the dielectric properties

### Experimental method 1 - solid-state material measurement

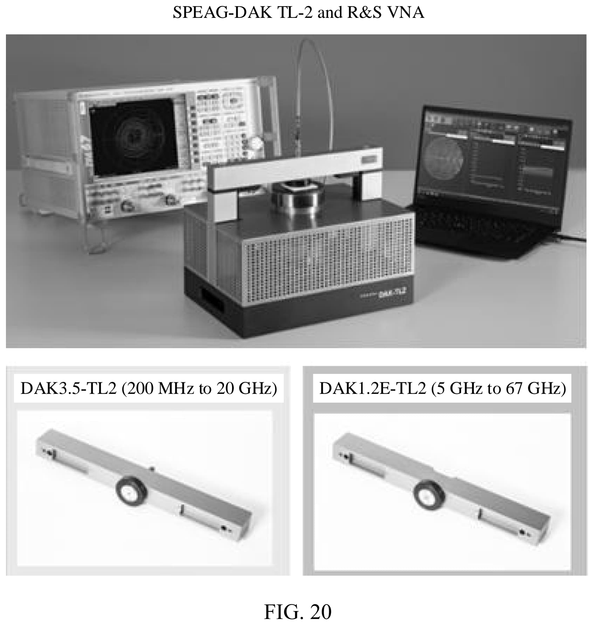

FIG. 20 shows a solid dielectric assessment kit used in an embodiment of this application.

For dielectric measurement of a solid-state material, a new thin-layer dielectric assessment kit (DAK-TL2) and R&S VNA from Switzerland SPEAG (Schmid & Partner Engineering AG, Switzerland) are used. The kit performs dielectric spectrum analysis based on an open coaxial probe method, and can be used for fast and precise dielectric measurement of thin-layer solid/semi-solid/gel/liquid. A DAK3.5-TL2 probe (0.2 GHz to 20 GHz) is used in combination with ZVL (Germany Munich Rohde & Schwarz) to perform measurement within the foregoing frequency range. Measurement resolution is set to100 megahertz, and respectively ranges from 0.2 gigahertz to 10 gigahertz. A DAK-TL2 system performs calibration by using standard three-point calibration before each measurement: open circuit, short circuit (copper strip), and deionized water serving as a load. A force of 500 N is applied in a short period of calibration to ensure proper contact between the probe and the copper strip.

### Experimental method 2 - liquid-state material measurement - coaxial probe method

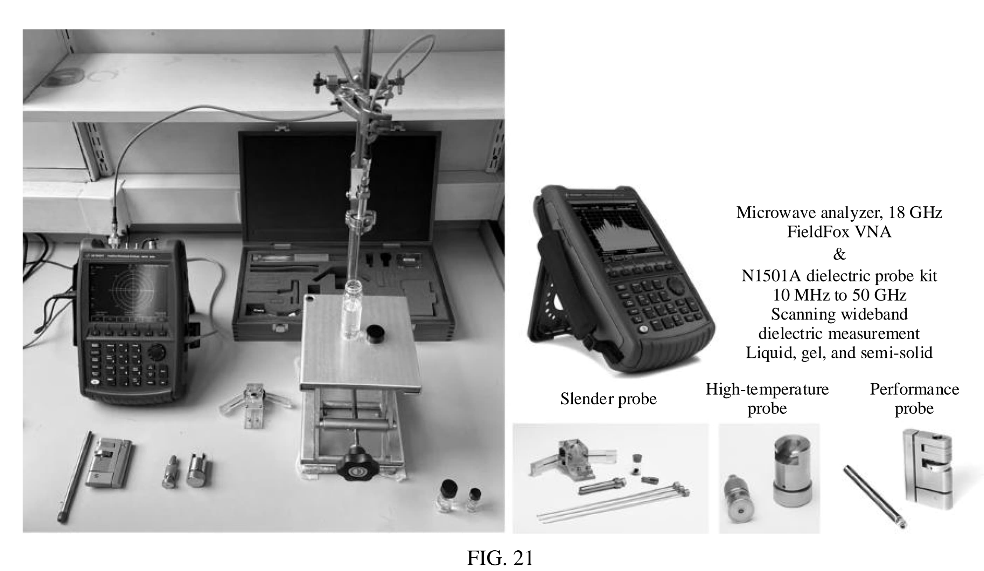

FIG. 21 shows a liquid dielectric assessment kit used in an embodiment of this application.

For dielectric measurement of a liquid-state material, an Agilent N9917A FieldFox microwave-vector network analyzer (VNA) and a Keysight 85070E dielectric probe kit are used. A measurement frequency range of the instrument is 18 kilohertz to 30 kilohertz, with 1001 data points. A radio frequency output permission level of the VNA is set to 0 dBm. The three-point calibration method is used, including open circuit (in air), short circuit (calibrating module), and 25°C distilled water measurement, and complies with the manufacturer's guide. Each unknown sample is measured by using a plurality of probes, and before measurement, repeated calibration is performed to confirm that a same dielectric constant spectrum has been obtained. All measurement is performed at 25°C in an inert nitrogen atmosphere (unless otherwise stated). A liquid sample is stored in a 10 mL standard laboratory glass bottle having a polytetrafluoroethylene-lined lid. The probe is immersed in an ionic liquid sample about 20 mm deep from a surface of the liquid. Relative complex dielectric constants of the chemical compound, including a real part and an imaginary part, are measured accordingly.

The above method has been verified by the National Physics Laboratory of the United Kingdom, and obtained data is accurate and reliable.

Therefore, this application provides a new effective and widely applicable method. In the method, the dielectric properties (the dielectric constant, relaxation, and loss) of the composite material may be controlled by employing a new processing technology and a non-toxic low-cost material, for example, to significantly improve the dielectric constant to a required level while reducing the loss tangent, or to bring dielectric relaxation into the composite material to implement a dielectric constant that varies with frequencies.

Although many values and value ranges mentioned in this application are not described by using the word "approximate", it should be understood that, these values and value ranges are the same as those described by using the word "approximate", and may vary within a range of ±5% without departing from the scope of this application.

Unless otherwise specified, all technical and scientific terms used in this specification have the same meaning as generally understood by a person skilled in the art to which this application belongs. Although some methods and materials are specifically described in this specification, methods and materials similar to or equivalent to those described in this specification may also be used to implement this application, although they are not specifically mentioned in this specification. For example, various particular compositions of the dielectric composite material described in this specification are not exhaustive of various chemical compositions that may be used to construct the dielectric composite material provided in this specification. In addition, characteristics of one or more shown dielectric composite materials may be combined with characteristics of another one or more shown dielectric composite materials to produce many different combinations, and these combinations are within the scope of this application. All publications, patent applications, patents, and other references mentioned in this specification are incorporated by reference in their entireties into this specification. In the case of a conflict, definitions in this application shall take precedence. In addition, these materials, methods, and examples are merely examples, and should not be considered as being intended to limit the protection scope claimed by this application.

Although this specification includes details of many specific implementations, these details should not be construed as limiting the scope of any invention or the scope of content that may be required, but as specific descriptions of possible features of specific implementations of a specific invention. In this specification, some features described in the context of each individual implementation solution may also be implemented in a manner of combination in a single implementation solution, and various features described in the context of a single implementation solution may also be implemented in a plurality of implementation solutions individually or in any appropriate sub-combination manner.

The following table lists acronyms and abbreviations used in this specification.

| Abbreviation or acronym | Full name |
|---|---|
| RF | Radio frequency |
| DRA | Dielectric resonator antenna |
| PCB | Printed circuit board |
| IoT | Internet of things |
| MOF | Metal-organic framework |
| PS-PIP | Polystyrene-polyisoprene copolymer |
| UoL | University of Liverpool |
| PEO | Polyethylene oxide |
| PC | Propylene carbonate |
| NMA | N-methylacetamide |
| Tol | Toluene |
| SEM | Scanning electron microscope |
| TiAlC | Titanium aluminum carbide |
| PS | Polystyrene |
| PTFE | Polytetrafluoroethylene |
| TEM | Transmission electron microscope |
| EDS | Energy dispersive spectrum |
| SA | Stearic acid |
| BA | Behenic acid, or docosanoic acid |
| Alp | Aluminum powder (irregular spherical particle) |
| Alf | Raw material aluminum sheet particle |
| SAlf | Aluminum sheet particle with a silicon dioxide shell made from a raw material aluminum sheet particle |
| m-Alp-SA | Aluminum sheet particle with a stearic acid coating (fatty acid) prepared in a laboratory |
| m-SAlp-SA | Aluminum sheet particle with a stearic acid coating and a silicon dioxide shell prepared in a laboratory |

## Claims

1. A non-spherical particle, wherein the non-spherical particle has a first dimensional size, a second dimensional size, and a third dimensional size, the first dimensional size is between 0.01 µm and 1 µm, a ratio of the first dimensional size to the second dimensional size is between 1/10 and 1/1200, the third dimensional size is between the first dimensional size and the second dimensional size, the non-spherical particle comprises one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn), a surface of the non-spherical particle is coated with a surfactant, and the surfactant is one or more of a fatty acid, an organosilicon compound, and a combination thereof.

2. The non-spherical particle according to claim 1, wherein the first dimensional size is between 0.05 µm and 0.5 µm, the second dimensional size is between 5 µm and 15 µm, and the third dimensional size is between 5 µm and 15 µm.

3. The non-spherical particle according to claim 1 or 2, wherein the ratio of the first dimensional size to the second dimensional size is between 1/20 and 1/1000.

4. The non-spherical particle according to claim 1, wherein the non-spherical particle comprises aluminum (Al).

5. The non-spherical particle according to claim 4, wherein the non-spherical particle comprises one or more of aluminum (Al), an aluminum complex, and an aluminum alloy.

6. The non-spherical particle according to claim 5, wherein the aluminum alloy comprises one or more of an aluminum-gallium (AlGa) alloy, an aluminum-magnesium (AlMg) alloy, a zinc-aluminum (ZnAl) alloy, a copper-aluminum (CuAl) alloy, and an aluminum-manganese (AlMn) alloy.

7. The non-spherical particle according to claim 1, wherein the non-spherical particle is one or more of a sheet-like particle, a rod-like particle, a needle-like particle, and a tree-like particle.

8. The non-spherical particle according to claim 1, wherein the fatty acid is a hydrophilic carboxylic acid having a saturated or unsaturated hydrophobic aliphatic carbon chain of 18 to 22 carbon atoms.

9. The non-spherical particle according to claim 1, wherein the fatty acid is selected from a stearic acid, a behenic acid and a combination thereof.

10. The non-spherical particle according to claim 1, wherein the organosilicone compound has a saturated or unsaturated hydrocarbyl chain of more than 18 carbon atoms.

11. The non-spherical particle according to claim 1, wherein the surface of the non-spherical particle is further coated with a silicon dioxide shell.

12. The non-spherical particle according to claim 11, wherein the non-spherical particle comprises aluminum, and a molar ratio of silicon dioxide to the aluminum is 0.4:10 to 5:10.

13. A method for preparing the non-spherical particle according to any one of claims 1 to 12, wherein the method comprises a step of grinding raw material powder and a surfactant together for 1 to 20 hours to obtain the non-spherical particle, the raw material powder comprises one or more elements of titanium (Ti), magnesium (Mg), aluminum (Al), nickel (Ni), silver (Ag), copper (Cu), indium (In), tin (Sn), silicon (Si), boron (B), gallium (Ga), zinc (Zn), iron (Fe), germanium (Ge), bismuth (Bi), gold (Au), and manganese (Mn), and the surfactant is selected from one or more of a fatty acid, an organosilicone compound, and a combination thereof.

14. The method according to claim 13, wherein the method comprises a step of grinding the raw material powder and the surfactant together in a ball mill for 2 to 10 hours.

15. The method according to claim 13, wherein the raw material powder comprises one or more of aluminum powder, aluminum complex powder, and aluminum alloy powder.

16. The method according to claim 13, wherein the raw material powder comprises aluminum powder.

17. The method according to claim 13, wherein the fatty acid is a hydrophilic carboxylic acid having a saturated or unsaturated hydrophobic aliphatic carbon chain of 18 to 22 carbon atoms.

18. The method according to claim 13, wherein the fatty acid is selected from a stearic acid, a behenic acid and a combination thereof.

19. The method according to claim 13, wherein the organosilicone compound has a saturated or unsaturated hydrocarbyl chain of more than 18 carbon atoms.

20. The method according to any one of claims 13 to 19, wherein the grinding is performed in the presence of a solvent, and the solvent is selected from one or more of toluene, mineral oil, hexane, anhydrous alcohol, acetone, chloroform, dioxane, diethyl ether, ethyl acetate, and a combination thereof.

21. The method according to claim 13, wherein the method further comprises a step of forming a silicon dioxide shell on a surface of the non-spherical particle.

22. The method according to claim 21, wherein a precursor for forming the silicon dioxide shell is selected from one or more of tetraethyl orthosilicate, tetrapropyl orthosilicate, tetraisopropyl orthosilicate, tetrabutyl orthosilicate, tetraisobutyl orthosilicate, tetratert butyl orthosilicate, tetrakis (methoxyethoxy) silane, sodium silicate (water glass), colloidal silicon dioxide, and gas phase silicon dioxide.

23. The method according to claim 21, wherein the non-spherical particle comprises aluminum, and a molar ratio of silicon dioxide to the aluminum is 0.4:10 to 5:10.

24. A dielectric composite material, comprising the non-spherical particle according to any one of claims 1 to 12 or comprising the non-spherical particle that is prepared by using the method according to any one of claims 13 to 23.

25. The dielectric composite material according to claim 24, wherein the composite material is in a solid state, a semi-solid state, a liquid state, or a liquid-solid mixed state.

26. The dielectric composite material according to claim 24, wherein the non-spherical particle is dispersed in a polymer matrix.

27. The dielectric composite material according to claim 26, wherein the polymer is selected from one or more of polyethylene glycol, polyvinyl chloride, polystyrene, polyisoprene, polyethylene oxide, polypropylene oxide, polytetrafluoroethylene, polyvinylidene fluoride, poly (vinylidene fluoride-co-trifluoroethylene), polyethylene, polypropylene, polyester, polyurethane, polyamide, polyimide, polyether ether ketone, and a copolymer thereof.

28. The dielectric composite material according to claim 24, wherein the non-spherical particle is present, based on an amount which is less than 80% of a total weight of the dielectric composite material, in the dielectric composite material.

29. The dielectric composite material according to claim 24, wherein the non-spherical particle is present, based on an amount which is 5% to 60% of a total weight of the dielectric composite material, in the dielectric composite material.

30. The dielectric composite material according to claim 24, wherein the dielectric composite material further comprises a silicon dioxide particle.

31. A method for regulating dielectric properties of a composite material, wherein the method comprises adding, to a matrix of the composite material, the non-spherical particle according to any one of claims 1 to 12 or the non-spherical particle that is prepared by using the method according to any one of claims 13 to 23, and the dielectric properties are one or more of a dielectric constant, a dielectric loss, and dielectric relaxation.

32. The method according to claim 31, wherein the method comprises regulating the dielectric properties by adjusting content of the non-spherical particle in the composite material.

33. The method according to claim 31, wherein the method comprises regulating the dielectric properties by adjusting content of the aluminum element in the non-spherical particle.

34. The method according to claim 31, wherein the method comprises regulating the dielectric properties by adjusting content and/or a type of a fatty acid, an organosilicone compound or a combination thereof on a surface of the non-spherical particle.

35. The method according to claim 31, wherein the method comprises regulating the dielectric properties by adjusting a thickness of a silicon dioxide shell of the non-spherical particle, and the thickness of the silicon dioxide shell is adjusted through a molar ratio between a precursor compound of the silicon dioxide shell and a body element of the non-spherical particle.

36. Use of the non-spherical particle according to any one of claims 1 to 12, or the non-spherical particle that is prepared by using the method according to any one of claims 13 to 23, or the dielectric composite material according to any one of claims 24 to 30 in preparing a dielectric element.

37. The use according to claim 36, wherein the dielectric element is selected from one or more of the following: an antenna, a radome, a polymer-ceramic composite dielectric element, a capacitor, a printed circuit board, a sensor, an actuator, a resonator, and a waveguide filter.
